(19)

**Europäisches Patentamt**
**European Patent Office**
**Office européen des brevets**

(11) **EP 3 130 822 B1**

(12) **EUROPEAN PATENT SPECIFICATION**

(45) Date of publication and mention
of the grant of the patent:
**05.06.2019 Bulletin 2019/23**

(51) Int Cl.:
*F16H 55/17* *(2006.01)*          *F16H 55/08* *(2006.01)*

(21) Application number: **14889112.0**

(86) International application number:
**PCT/CN2014/076470**

(22) Date of filing: **29.04.2014**

(87) International publication number:
**WO 2015/154317 (15.10.2015 Gazette 2015/41)**

(54) **POINT CONTACT GEAR BASED ON CONJUGATE CURVES, MESHING PAIR AND MACHINING TOOL THEREFOR**

PUNKTKONTAKTGETRIEBE BASIEREND AUF KONJUGIERTEN KURVEN, ZAHNPAAR UND BEARBEITUNGSWERKZEUG DAFÜR

ENGRENAGE À CONTACT PONCTUEL BASÉ SUR DES COURBES CONJUGUÉES, PAIRE D'ENGRÈNEMENT ET OUTIL D'USINAGE À CET EFFET

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.04.2014 CN 201410142525**

(43) Date of publication of application:
**15.02.2017 Bulletin 2017/07**

(73) Proprietor: **Chongqing University**
**Chongqing 400030 (CN)**

(72) Inventors:
• **CHEN, BingKui**
**Chongqing 400030 (CN)**
• **LIANG, Dong**
**Chongqing 400030 (CN)**
• **GAO, Yan'e**
**Chongqing 400030 (CN)**
• **LI, ChaoYang**
**Chongqing 400030 (CN)**

(74) Representative: **Schmitt-Nilson Schraud Waibel Wohlfrom**
**Patentanwälte Partnerschaft mbB**
**Pelkovenstraße 143**
**80992 München (DE)**

(56) References cited:
EP-A1- 1 908 992          CN-A- 102 853 054
CN-A- 102 853 054         CN-A- 103 047 393
CN-A- 103 075 493         CN-A- 103 075 493
CN-B- 102 059 403         CN-Y- 2 298 371
JP-A- 2007 191 050        US-A1- 2010 212 444
US-A1- 2013 042 711

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

This invention belongs to the field of gear transmission technology, and more particularly to point contact gears, meshing pair and machining tool.

BACKGROUND ART

A gear, as a typical mechanical element, mainly determines the equipment performance. So design of the gear transmission element with high performance is of significantly importance and engineering practical value. For a traditional gear transmission such as helical gear transmission, worm gear transmission, bevel gear pair, and hypoid gear pair etc., tooth profiles are all conjugate surfaces, and the meshing tooth profiles are all convex tooth profile. The line contact is generated in the meshing process, so the tooth surfaces have a low load capacity, a large sliding ratio between tooth surfaces, and serious tooth profile wear.

The development of science and technology has put forward higher and higher requirements to high speed, high load capacity, and high power gear transmission. So circular arc gears have obtained great development. Circular arc gears are point contact gear transmission, and their typical characteristic is that meshing tooth profiles are point contact meshing of a convex circular arc profile and a concave circular arc profile and the meshing of circular arc gears is nearly pure rolling. After running-in, a contact point will spread to a contact area so that the contact strength will increase. Nowadays, a gear and its meshing pair based on conjugate curves have been disclosed in patents No. CN 102853054 A, showing the features of the preamble of claim 1 and No. CN 103075493 A, wherein the tooth profile curved surfaces of the gear are tubular tooth surfaces generated by the movement of a spherical center along with a curve of the center of a circle, the tooth profile curved surfaces are both circular arcs. A meshing pair composed by the gears has only one contact point when meshing with each other. This kind of the gear meshing pair has point contact characteristic in the initial manufacture. To achieve a better contact characteristic, the running-in process must be carried out. For a better running-in characteristic, the gears are of soft or middle hardness tooth surfaces. The running-in process increases manufacture cost and the tooth surfaces with soft or middle hardness have less contact strength and load capacity. So it is needed to design gears with hardness tooth surfaces and two, three or more contact points when the manufacture process are finished according to use require to be applied to industry with high strength require. And the running-in time and manufacture cost will be greatly decreased.

DETAILS OF THIS INVENTION

Accordingly, the present invention has been developed to solve the above-mentioned problems, and an object of the present invention is to provide a point contact gear, meshing pair having one, two, or more contact points, and the machining tool therefor.

The disclosure of the present invention firstly provide a point contact gear based on conjugate curves, and a curve equation of a contact curve composed of meshing points on tooth surface of the gear is

$$\begin{cases} x_1 = x_i(u) \\ y_1 = y_i(u) \qquad u_{\min} \leq u \leq u_{\max} \qquad (i = 1,3,5,...,2n+1) \\ z_1 = z_i(u) \end{cases}$$

wherein, $u$ is an independent variable parameter of the curve; $u_{\min}$ and $u_{\max}$ is a value range of the contact curve, viz. from a parameter of the curve at engaging-in point of the tooth profile to a parameter of the curve at engaging-out point of the tooth profile; the subscript $i$ represents different contact curves;

an equation of an equidistant curve of said contact curve along the direction of common normal line of the tooth surfaces is

$$\Gamma'_1: \begin{cases} x_{1\rho} = x_1 + \rho_i \bullet n_{xi} \\ y_{1\rho} = y_1 + \rho_i \bullet n_{yi} \\ z_{1\rho} = z_1 + \rho_i \bullet n_{zi} \end{cases}$$

wherein, $\rho_i$ is a distance between the contact curve and the equidistant curve;

$n_{xi}$, $n_{yi}$ and $n_{zi}$ are decomposed normal vectors of unit vector of the common normal line at the meshing point along the directions of axes of the coordinate system regarding to the gear;

an equation of a tooth profile curve of the gear under the coordinate system of normal plane of the contact curve is

$$C_1: \begin{cases} x_{n1} = x_{n1}(v_1) \\ y_{n1} = y_{n1}(v_1) \\ z_{n1} = z_{n1}(v_1) \end{cases}$$

Wherein, $v_1$ is an independent variable parameter of the curve.

A meshing tooth surface of said gear is obtained by the movement of the tooth profile curve along the equidistant curve, and its equation is:

$$r = r(u, v_1)$$

wherein, $u$ is an independent variable parameter of the contact curve, and $v_1$ is an independent variable parameter of the tooth profile curve.

The disclosure of the invention has also proposed a point contact gear meshing pair based on conjugate curves, which includes a convex gear and a concave gear which mesh with each other in point contact, and a curve equation of a contact curve $\Gamma_i$ composed of meshing points on a tooth profile curved surface of said convex gear is:

$$\begin{cases} x_1 = x_i(u) \\ y_1 = y_i(u) \qquad u_{min} \le u \le u_{max} \qquad (i = 1,3,5,...,2n+1) \\ z_1 = z_i(u) \end{cases}$$

wherein, $u$ is an independent variable parameter of the curve; $u_{min}$ and $u_{max}$ is a value range of the contact curve, viz. from a parameter of the curve at engaging-in point of the tooth profile to a parameter of the curve at engaging-out point of the tooth profile; the subscript $i$ represents different contact curves;

according to the principle of conjugate curves, a curve equation of a contact curve $\Gamma_{i+1}$ composed of meshing points on a tooth profile curved surface of said concave gear is:

$$\begin{cases} x_2 = \cos\varphi_1 \cos\varphi_2 x_1 - \sin\varphi_1 \cos\varphi_2 y_1 + \sin\varphi_2 z_1 - a\cos\varphi_2 \\ y_2 = \cos\varphi_1 \sin\varphi_2 x_1 - \sin\varphi_1 \sin\varphi_2 y_1 - \cos\varphi_2 z_1 - a\sin\varphi_2 \\ z_2 = \sin\varphi_1 x_1 + \cos\varphi_1 y_1 \\ \Phi = \boldsymbol{n} \bullet \boldsymbol{v}^{(12)} = 0 \end{cases}$$

wherein, $\varphi_1$ and $\varphi_2$ are rotation angles of the convex gear and concave gear, respectively, and $\varphi_2 = i_{21}\varphi_1$, wherein $i_{21}$ is a transmission ratio; $a$ is a standard center distance of a gear transmission; $\boldsymbol{n}$ is a normal vector of the conjugate curve at the meshing point along the direction of the common normal line; and $u^{(12)}$ is a velocity vector of relative movement of the meshing pair at the meshing point;

an equation of an equidistant curve $\Gamma_1'$ corresponding to the contact curve $\Gamma_i$ of said convex gear is

$$\Gamma'_1 \begin{cases} x_{1\rho} = x_1 + \rho_i \bullet n_{xi} \\ y_{1\rho} = y_1 + \rho_i \bullet n_{yi} \\ z_{1\rho} = z_1 + \rho_i \bullet n_{zi} \end{cases}$$

wherein, $\rho_i$ is a distance between the contact curve $\Gamma_i$ and the equidistant curve $\Gamma_1'$; $n_{xi}$, $n_{yi}$ and $n_{zi}$ are decomposed normal vectors of unit vector of given normal line at the meshing point along the direction of axes of the coordinate system regarding to the convex gear;

an equation of an equidistant curve $\Gamma'_2$ corresponding to the contact curve $\Gamma_{i+1}$ of said concave gear is

$$\Gamma'_2 \quad \begin{cases} x_{2\rho} = x_2 + \rho_{i+1} \cdot n_{xi+1} \\ y_{2\rho} = y_2 + \rho_{i+1} \cdot n_{yi+1} \\ z_{2\rho} = z_2 + \rho_{i+1} \cdot n_{zi+1} \end{cases}$$

wherein, $\rho_{i+1}$ is a distance between the contact curve $\Gamma_{i+1}$ and the equidistant curve $\Gamma'_2$; $n_{xi+1}$, $n_{yi+1}$ and $n_{zi+1}$ are decomposed normal vectors of unit vector of given normal line at the meshing point along the direction of axes of the coordinate system regarding to the concave gear;

a tooth profile curve $C_1(v_1)$ of said convex gear is a curve in the normal plane of the contact curve $\Gamma_i$, when $i = 1$, there is only one contact curve on the meshing tooth surface, that is there is one contact point on the tooth profile curve; when $i = 3$, there are two contact curves on the meshing tooth surface, that is there are two contact points on the tooth profile curve; when $i = 2n+1(n \geq 2)$, there are $n+1$ contact curves on the meshing tooth surface, and there are $n+1$ contact points on the tooth profile curve;

an equation of the tooth profile curve $C_1(v_1)$ of said convex gear under coordinate system of normal plane of the contact curve $\Gamma_i$ is

$$C_1 \quad \begin{cases} x_{n1} = x_{n1}(v_1) \\ y_{n1} = y_{n1}(v_1) \\ z_{n1} = z_{n1}(v_1) \end{cases}$$

wherein, $v_1$, is an independent variable parameter of the tooth profile curve $C_1(v_1)$;

an equation of a tooth profile curve $C_2(v_2)$ of said concave gear under coordinate system of normal plane of the contact curve $\Gamma_{i+1}$ is

$$C_2 \quad \begin{cases} x_{n2} = x_{n2}(v_2) \\ y_{n2} = y_{n2}(v_2) \\ z_{n2} = z_{n2}(v_2) \end{cases}$$

wherein, $v_2$ is an independent variable parameter of the tooth profile curve $C_2(v_2)$;

the meshing tooth surface of said convex gear is generated by the movement of the tooth profile curve $C_1(v_1)$ along the equidistant curve $\Gamma'_1$, and its equation is

$$\Sigma_1 \qquad r = r(u, v_1)$$

wherein, $u$ is an independent variable parameter of the contact curve, and $v_1$ is an independent variable parameter of the tooth profile curve $C_1(v_1)$;

the meshing tooth surface of said concave gear is generated by the movement of the tooth profile curve $C_2(v_2)$ along the equidistant curve $\Gamma'_2$, and its equation is

$$\Sigma_2 \qquad r = r(u, v_2)$$

wherein, $u$ is an independent variable parameter of the contact curve, and $v_2$ is an independent variable parameter of the tooth profile curve $C_2(v_2)$.

Further, an equation of the tooth profile curve $C_1(v_1)$ of said convex gear under coordinate system of normal plane of the contact curve $\Gamma_i$ is

$$C_1 \quad \begin{cases} x_{n1} = \rho_a \sin v_1 \\ y_{n1} = -\rho_a \cos v_1 \\ z_{n1} = 0 \end{cases}$$

wherein, $\rho_a$ is a radius of the tooth profile curve; $v_1$ is an angle between the coordinate axis $x_{n1}$ and the normal line of any point on the tooth profile curve.

Further, an equation of the tooth profile curve $C_2(v_2)$ of said concave gear under coordinate system of normal plane of the contact curve $\Gamma_{i+1}$ is

$$C_2 \begin{cases} x_{n2} = \rho_2 \sin v_2 + e \\ y_{n2} = -\rho_2 \cos v_2 + l_f \\ z_{n2} = 0 \end{cases}$$

wherein, $\rho_2$ is a radius of the tooth profile curve; $v_2$ is an angle between the coordinate axis $x_n$ and the normal line of any point on the tooth profile curve; $e$ is a coordinate value of tooth profile center on the coordinate axis $x_n$; $l_f$ is a coordinate value of tooth profile center on the coordinate axis $y_n$.

Further, an equation of the tooth profile curve $C_2(v_2)$ of said concave gear under coordinate system of normal plane of the contact curve $\Gamma_{i+1}$ is

$$C_2 \begin{cases} x_{2n} = v_2 \cos \alpha - \dfrac{v_2^2}{2p} \sin \alpha + l \sin \alpha \\ y_{2n} = v_2 \sin \alpha + \dfrac{v_2^2}{2p} \cos \alpha - l \cos \alpha \\ z_{2n} = 0 \end{cases}$$

wherein, $v_2$ is an independent variable parameter of a parabolic curve; $\alpha$ is an angle between the axis $y_{2n}$ and the vertex of the parabolic curve; $l$ is a distance between the vertex of the parabolic curve and the origin of coordinate system of normal plane, and $l = \dfrac{\rho_a \sin^2 \theta_j}{2 \cos \theta_j} + \rho_a \cos \theta_j$ , $l\ \theta_j$ is an angle between a contact point of the parabolic curve and the

vertex, and $\rho_a$ is a radius of the tooth profile curve $C_1(v_1)$ of the convex teeth

Further, an equation of the tooth profile curve $C_2(v_2)$ of said concave gear under coordinate system of normal plane of the contact curve $\Gamma_{i+1}$ is

$$\begin{cases} x_{2n} = v_2 \\ y_{2n} = a_0 + a_1 v_2 + a_2 v_2^2 + ... + a_m v_2^m \end{cases}$$

wherein, $v_2$ is an independent variable parameter of the tooth profile curve; $a_0, a_1, ..., a_m$ are coefficients of the equation of the tooth profile curve.

Further, the curve equation of the contact curve $\Gamma_i$ of said convex gear is a cylindrical helix, and its curve equation is

$$\begin{cases} x_1 = R_i \cos u \\ y_1 = R_i \sin u \\ z_1 = p_i u \end{cases}$$

Wherein, $u$ is an independent variable parameter of the cylindrical helix; $R_i$ is a radius of a cylindrical surface where the cylindrical helix is located; and $P_i$ is a screw parameter of the cylindrical helix;

according to the principle of conjugate curves, an curve equation of the contact curve $\Gamma_{i+1}$ of said concave gear is

$$\begin{cases} x_2 = R_{i+1} \cos u \\ y_2 = R_{i+1} \sin u \\ z_2 = p_{i+1} u \end{cases}$$

wherein, $u$ is an independent variable parameter of the curve; $R_{i+1}$ is a radius of a cylinder; and $p_{i+1}$ is a screw parameter; an equation of the equidistant curve $\Gamma'_1$ corresponding to the contact curve $\Gamma_i$ is

$$\Gamma'_1 \begin{cases} x_1 = r'_1 \cos u \\ y_1 = r'_1 \sin u \\ z_1 = p_i u \end{cases}$$

wherein, $u$ is an independent variable parameter of the curve; $r'_1 = \sqrt{R_i^2 - (\rho_i \cos \alpha_i \cos \beta)^2} - \rho_i \sin \alpha_i$, wherein $\rho_i$ is an equidistant distance; $\alpha_i$ is the normal pressure angle of the contact point; and $p_i = r_1 \cot \beta$, wherein $\beta$ is an helix angle; an equation of the equidistant curve $\Gamma'_2$ corresponding to the contact curve $\Gamma_{i+1}$ is

$$\Gamma'_2 \begin{cases} x_1 = r'_2 \cos u \\ y_1 = r'_2 \sin u \\ z_1 = p_2 u \end{cases}$$

wherein, $u$ is an independent variable parameter of the curve; $r'_2 = \sqrt{R_{i+1}^2 - (\rho_{i-1} \cos \alpha_i \cos \beta)^2} - \rho_{i+1} \sin \alpha_i$, and $r_2 = i_{21} \times r_1$; wherein $\rho_{i+1}$ is an equidistant distance between the contact curve and the equidistant curve $\Gamma'_2$; $\alpha_{i+1}$ is a normal pressure angle; and $p_2$ is a screw parameter, and $p_2 = r_2 \cos \beta$;
an equation of the tooth profile curve $C_1(v_1)$ of said convex gear under coordinate system of normal plane of the contact curve $\Gamma_i$ is

$$C_1 \begin{cases} x_{n1} = x_{n1}(v_1) \\ y_{n1} = y_{n1}(v_1) \\ z_{n1} = z_{n1}(v_1) \end{cases}$$

wherein, $v_1$, is an independent variable parameter of the tooth profile curve $C_1$;.
an equation of the tooth profile curve $C_2(v_2)$ of said concave gear under coordinate system of normal plane of the contact curve $\Gamma_{i+1}$ is

$$C_2 \begin{cases} x_{n2} = x_{n2}(v_2) \\ y_{n2} = y_{n2}(v_2) \\ z_{n2} = z_{n2}(v_2) \end{cases}$$

wherein, $v_2$ is an independent variable parameter of the tooth profile curve $C_2$;
a meshing tooth surface of said convex gear is generated by the movement of the tooth profile curve $C_1(v_1)$ along the equidistant curve $\Gamma'_1$, and its equation is

$$\begin{cases} x_1 = (x_{1n} + r'_1) \cos \phi_1 + y_{1n} \cos \beta \sin \phi_1 \\ y_1 = (x_{1n} + r'_1) \sin \phi_1 + y_{1n} \cos \beta \cos \phi_1 \\ z_1 = r'_1 \cot \beta \cdot \phi_1 - y_{1n} \sin \beta \end{cases}$$

wherein, $r_1$ is a pitch radius of the convex gear; $\phi_1$ is a rotation angle of the convex gear; and $\beta$ is the helix angle of the gear;
a meshing tooth surface of said concave gear is generated by the movement of the tooth profile curve $C_2(v_2)$ along the equidistant curve $\Gamma_2'$, and its equation is

$$\begin{cases} x_2 = \left(x_{2n} + r_2\right)\cos\phi_2 + y_{2n}\cos\beta\sin\phi_2 \\ y_2 = \left(x_{2n} + r_2\right)\sin\phi_2 + y_{2n}\cos\beta\cos\phi_2 \\ z_2 = r_2\cot\beta\bullet\phi_2 - y_{2n}\sin\beta \end{cases}$$

Wherein, $r_2$ is a pitch radius of the convex gear; $\phi_2$ is a rotation angle of the convex gear, and $\phi_2 = i_{21}\phi_1$, wherein $i_{21}$ is a transmission ratio of the gear; and $\beta$ is a helix angle of the gear.

The disclosure of the present invention also provides a machining tool to manufacture point contact gear meshing pairs, and the meshing pair includes a cutter shaft, and several cutting teeth fixed along the circumferential direction of said cutter shaft; wherein a normal tooth profile curve of said cutting tooth includes working section and transition section; said transition section is a straight line or a circular arc; a curve equation of said working section is

$$C_i \qquad \begin{cases} x_n = x_n(v_i) \\ y_n = y_n(v_i) \\ z_n = z_n(v_i) \end{cases}$$

wherein, $v_i$ is an independent variable parameter of the curve, when $i = 1$, the curve equation of tooth profile of the convex gear is represented, and when $i = 2$, the curve equation of tooth profile of the concave gear is represented.

The benefit effects of the present invention is:

A point contact gear and meshing pair thereof based on conjugate curves are further disclosed, and a meshing manner of the meshing pair is making both a convex gear tooth surface and a concave tooth surface in one-point or multi-points contact, and a contact trace of the contact points on each of the tooth surface is a smooth space curve. The meshing characters of the conjugate curves for this transmission are inherited; in addition, the tooth profiles with point contact are high in contact strength, high in bearing capacity, high in transmission efficiency and low in lubricating oil temperature rise, the sliding ratio is greatly lowered, and abrasion is low. At the same time, the gears can mesh in one-point, two-points or multi-points contact at the same time by varying the contact curves according to the application requirements. And the limitation of only one point contact of the point contact gear during meshing procedure whose tubular envelope surface generated by the movement of the spherical center along with a curve of the center of a circle. So the point contact gear drive based on conjugate curves is of high performance and have a wide application. The machining tool to manufacture a point contact gear meshing pairs based on conjugate curves can use the existing machine tool to manufacture the point contact gears based on conjugate curves according to the present invention conveniently and quickly, which reduces the manufacture cost and accelerates the application and use of the point contact gears based on conjugate curves according to the present invention.

BRIEF DESCRIPTION OF THE DRAWINGS

The invention will be explained in more detail hereinafter by way of embodiments illustrated in the drawings, wherein:

FIG. 1 shows a schematic view of meshing of a single tooth of point contact gear based on conjugate curves according to the present invention;

FIG. 2 shows a schematic view of the selected cylindrical helix according to one embodiment;

FIG. 3 shows a schematic view of the tooth profile curve of the point contact gear based on conjugate curves according to the present invention;

FIG. 4 shows a schematic view of the generation of a meshing tooth surface of the point contact gear based on conjugate curves according to the present invention;

FIG. 5 shows a schematic view of coordinate systems of curve conjugating according to one embodiment;

FIG. 6 shows a schematic view of a single tooth of a conjugate curve gear having one contact point according to the embodiment;

FIG. 7 shows a schematic view of a single tooth of a conjugate curve gear having two contact points according to the embodiment;

FIG. 8 shows a schematic view of a single tooth of a conjugate curve gear having three contact points according to the embodiment;

FIG. 9 shows a structural schematic view of a machining tool for manufacturing a point contact convex gear based on conjugate curves according to the present invention;

FIG. 10 shows a structural schematic view of a machining tool for manufacturing a point contact concave gear based on conjugate curves according to the present invention;

FIG. 11 is a view of a normal tooth profile of a machining tool for manufacturing a point contact convex gear based on conjugate curves according to the present invention;

FIG. 12 is a view of a normal tooth profile of a machining tool for manufacturing a point contact concave gear based on conjugate curves according to the present invention.

**EMBODIMENTS:**

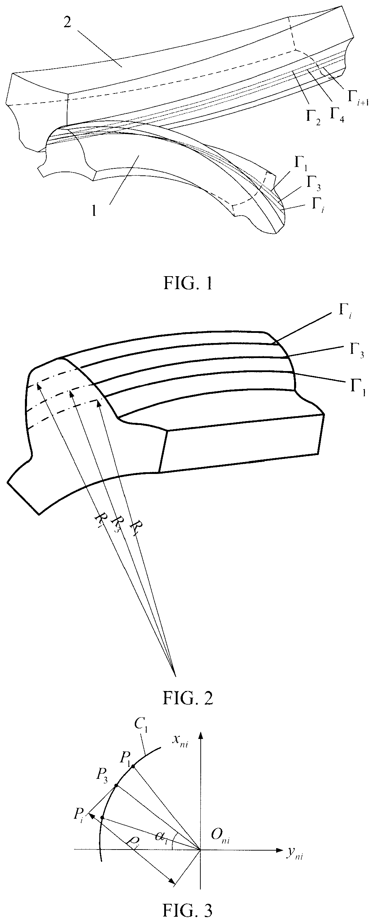

FIG. 1 shows a schematic view of meshing of a single tooth of point contact gear based on conjugate curves according to the present invention. A point contact gear meshing pair based on conjugate curves is shown in figure, the mated tooth surfaces for a convex gear 1 and a concave gear 2 mesh with each other in one-point or multi-point contact. Meshing tooth surfaces of a convex gear 1 and a concave gear 2 are generated by the movement of tooth profile curves of the convex gear 1 and the concave gear 2 along curves $\Gamma'_1$, $\Gamma'_2$, respectively. Tooth profile curves of the convex gear 1 and the concave gear 2 are profile curve $C_1$ of the convex gear 1 and profile curve $C_2$ of the concave gear 2 in the common normal plane, respectively.

The curves $\Gamma'_1$, $\Gamma'_2$ are equidistant smooth curve obtained by the movement of curves $\Gamma_1$, $\Gamma_2$, curves $\Gamma_3$, $\Gamma_4$, or curves $\Gamma_i$, $\Gamma_{i+1}$ ($i$=1,3.5,...,2$n$ +1) along the direction opposite to the common normal line at the meshing points. Said curves $\Gamma_1$, $\Gamma_2$ or curves $\Gamma_3$, $\Gamma_4$ or curves $\Gamma_i$, $\Gamma_{i+1}$ are smooth curves in the convex gear 1 and concave gear 2 of the gear meshing pair respectively, and curve $\Gamma_{i+1}$ is the conjugate curve obtained by the specific movement of the given curve $\Gamma_i$, and they are conjugate curves. Said curves $\Gamma_1$, $\Gamma_3$ and $\Gamma_i$ are smooth curves, and the curves are parallel to each other.

An equation of a selected smooth contact curve $\Gamma_i$ is

$$\begin{cases} x_1 = x_i(u) \\ y_1 = y_i(u) \qquad u_{\min} \le u \le u_{\max} \quad (i = 1,3,5,...,2n+1) \\ z_1 = z_i(u) \end{cases}$$

wherein, $u$ is a parameter of the curve; $u_{\min}$ and $u_{\max}$ is a value range of the contact curve, viz. from a parameter of the curve at engaging-in point of the tooth profile to a parameter of the curve at engaging-out point of the tooth profile; the subscript $i$ represents different contact curves.

An equation of contact curve $\Gamma_{i+1}$ can be obtained according to the principle of conjugate curves, and it is

$$\begin{cases} x_2 = \cos\varphi_1 \cos\varphi_2 x_1 - \sin\varphi_1 \cos\varphi_2 y_1 + \sin\varphi_2 z_1 - a\cos\varphi_2 \\ y_2 = \cos\varphi_1 \sin\varphi_2 x_1 - \sin\varphi_1 \sin\varphi_2 y_1 - \cos\varphi_2 z_1 - a\sin\varphi_2 \\ z_2 = \sin\varphi_1 x_1 + \cos\varphi_1 y_1 \\ \Phi = \boldsymbol{n} \bullet \boldsymbol{v}^{(12)} = 0 \end{cases}$$

wherein, $\varphi_1$ and $\varphi_2$ are rotation angles of the gear 1 and gear 2 respectively, and $\varphi_2 = i_{21}\varphi_1$, wherein $i_{21}$ is a transmission ratio; $a$ is a standard center distance of a gear transmission; $\boldsymbol{n}$ is a normal vector of the conjugate curves at the meshing point along the direction of given contact angle; and $u^{(12)}$ is a velocity vector of relative movement of the meshing pair at the meshing point.

Equations of said equidistant curves are:

$$\Gamma'_1 \quad \begin{cases} x_{1\rho} = x_1 + \rho_i \bullet n_{xi} \\ y_{1\rho} = y_1 + \rho_i \bullet n_{yi} \\ z_{1\rho} = z_1 + \rho_i \bullet n_{zi} \end{cases}$$

$$\Gamma'_2 \quad \begin{cases} x_{2\rho} = x_2 + \rho_{i+1} \bullet n_{xi+1} \\ y_{2\rho} = y_2 + \rho_{i+1} \bullet n_{yi+1} \\ z_{2\rho} = z_2 + \rho_{i+1} \bullet n_{zi+1} \end{cases}$$

wherein, $\rho_i$ is a distance between the contact curve $\Gamma_i$ and the equidistant curve $\Gamma_1'$; $n_{xi}$, $n_{yi}$ and $n_{zi}$ are decomposed normal vectors of unit vector of the common normal line at the meshing point along the direction of axes of the coordinate system regarding to the gear 1; $\rho_{i+1}$ is a distance between the contact curve $\Gamma_{i+1}$ and the equidistant curve $\Gamma'_2$; $n_{xi+1}$, $n_{yi+1}$ and $n_{zi+1}$ are decomposed normal vectors of unit vector of given normal line at the meshing point along the direction of axes of the coordinate system regarding to the gear 2.

A tooth profile curve is a curve in the normal plane of the curve $\Gamma_i$, when $i = 1$, there is only one contact curve on the meshing tooth surface, that is there is one contact point on the tooth profile curve; when $i = 3$, there are two contact curves on the meshing tooth surface, that is there are two contact points on the tooth profile curve; when $i=2n+1(n\geq 2)$, there are $n+1$ contact curves on the meshing tooth surface, and there are $n+1$ contact points on the tooth profile curve.

An equation of the tooth profile curve $C_1(v_1)$ of said convex gear 1 under coordinate system of normal plane of the curve $\Gamma_i$ is

$$C_1 \qquad \begin{cases} x_{n1} = \rho_a \sin v_1 \\ y_{n1} = -\rho_a \cos v_1 \\ z_{n1} = 0 \end{cases}$$

wherein, $v_1$ is an independent variable parameter of the tooth profile curve $C_1(v_1)$;
an equation of a tooth profile curve $C_2(v_2)$ of said concave gear 2 under coordinate system of normal plane of the curve $\Gamma_{i+1}$ is

$$C_2 \qquad \begin{cases} x_{n2} = x_{n2}(v_2) \\ y_{n2} = y_{n2}(v_2) \\ z_{n2} = z_{n2}(v_2) \end{cases}$$

wherein, $v_2$ is an independent variable parameter of the tooth profile curve $C_2(v_2)$;
the meshing tooth surface of said convex gear 1 is generated by the movement of the tooth profile curve $C_1(v_1)$ along the equidistant curve $\Gamma'_1$, and its equation is

$$\Sigma_1 \qquad\qquad r = r(u, v_1)$$

wherein, $u$ is an independent variable parameter of the contact curve, and $v_1$ is an independent variable parameter of the tooth profile curve $C_1(v_1)$;
the meshing tooth surface of said concave gear 2 is generated by the movement of the tooth profile curve $C_2(v_2)$ along the equidistant curve $\Gamma'_2$, and its equation is

$$\Sigma_2 \qquad\qquad r = r(u, v_2)$$

wherein, $u$ is an independent variable parameter of the contact curve, and $v_2$ is an independent variable parameter of the tooth profile curve $C_2(v_2)$.

When parameter $u$ is a constant, that is $u = u_0$, and parameter $v_j(j=1,2)$ varies, curve $r(u_0,v_j)$ on the curved surface will be obtained, and this curve is a tooth profile curve of normal plane; when the parameter $v_j$ is a constant, that is $v = v_{j0}$, and the parameter $u$ varies, curve $r(u,v_0)$ on the curved surface will be obtained; and if $v_{j0}$ is a meshing point, the curve $r(u,v_{j0})$ is a contact curve, if not, the curve $r(u,v_{j0})$ doesn't participate in meshing.

In this embodiment, the tooth profile curve $C_1(v_1)$ of is a curve in the normal plane of the curve $\Gamma_i$, when $i = 1$, there is only one contact curve on the meshing tooth surface, that is there is one contact point on the tooth profile curve; when $i = 3$, there are two contact curves on the meshing tooth surface, that is there are two contact points on the tooth profile curve; when $i = 2n + 1(n \geq 2)$, there are $n+1$ contact curves on the meshing tooth surface, and there are $n+1$ contact points on the tooth profile curve.

An equation of the tooth profile curve $C_1(v_1)$ of said convex gear 1 under coordinate system of normal plane of the curve $\Gamma_i$ is

$$C_1 \quad \begin{cases} x_{n1} = \rho_a \sin v_1 \\ y_{n1} = -\rho_a \cos v_1 \\ z_{n1} = 0 \end{cases}$$

wherein, $\rho_a$ is a radius of the tooth profile curve; $v_1$ is an angle between the coordinate axis $x_{a1}$ and the normal line of any point on the tooth profile curve.

In this embodiment, when $i = 1$, there is one contact point on the tooth profile curve, and an equation of the tooth profile curve $C_2(v_2)$ of said concave gear 2 under coordinate system of normal plane of the contact curve $\Gamma_{i+1}$ is

$$C_2 \quad \begin{cases} x_{n2} = \rho_2 \sin v_2 + e \\ y_{n2} = -\rho_2 \cos v_2 + l \\ z_{n2} = 0 \end{cases}$$

wherein, $\rho_2$ is a radius of the tooth profile curve; $v_2$ is an angle between the coordinate axis $x_n$ and the normal line of any point on the tooth profile curve; $e$ is a coordinate value of tooth profile center on the coordinate axis $x_n$; $l$ is a coordinate value of tooth profile center on the coordinate axis $y_n$.

In this embodiment, when $i = 3$, there are two contact points on the tooth profile curve, and an equation of the tooth profile curve $C_2(v_2)$ of said concave gear 2 under coordinate system of normal plane of the curve $\Gamma_{i+1}$ is

$$C_2 \quad \begin{cases} x_{2n} = v_2 \cos \alpha - \dfrac{v_2^{\,2}}{2p} \sin \alpha + l \sin \alpha \\[2mm] y_{2n} = v_2 \sin \alpha + \dfrac{v_2^{\,2}}{2p} \cos \alpha - l \cos \alpha \\[2mm] z_{2n} = 0 \end{cases}$$

wherein, $v_2$ is a parameter of a parabolic curve; $\alpha$ is an angle between the axis $y_{2n}$ and the vertex of the parabolic curve; $l$ is the distance between the vertex of the parabolic curve and the origin of coordinate system of normal plane, and

$l = \dfrac{\rho_a \sin^2 \theta}{2 \cos \theta} + \rho_a \cos \theta$ , $\theta$ is an angle between a contact point of the parabolic curve and the vertex

In the embodiment, when $i = 2n + 1 (n \geq 2)$, there are two ways to obtain the tooth profile curve of the concave gear 2.

(1) One is that: Suppose that coordinate values of contact points on the contact curve of the concave gear 2 are $(x_0, y_0)$ , $(x_1, y_1)$, $(x_2, y_2)$ $(x_{n-1}, y_{n-1})$, the tooth profile curve fitting is used by the least square method, and an equation of tooth profile curve is:

$$
\begin{bmatrix}
n+1 & \sum\limits_{j=0}^{n} x_j & \sum\limits_{j=0}^{n} x_j^2 & \cdots & \sum\limits_{j=0}^{n} x_j^m \\
\sum\limits_{j=0}^{n} x_j & \sum\limits_{j=0}^{n} x_j^2 & \sum\limits_{j=0}^{n} x_j^3 & \cdots & \sum\limits_{j=0}^{n} x_i^{m+1} \\
\sum\limits_{j=0}^{n} x_i^2 & \sum\limits_{j=0}^{n} x_j^3 & \sum\limits_{j=0}^{n} x_j^4 & \cdots & \sum\limits_{j=0}^{n} x_i^{m+2} \\
\vdots & \vdots & \vdots & & \vdots \\
\sum\limits_{j=0}^{n} x_i^m & \sum\limits_{j=0}^{n} x_i^{m+1} & \sum\limits_{j=0}^{n} x_j^{m+2} & \cdots & \sum\limits_{j=0}^{n} x_j^{2m}
\end{bmatrix}
\begin{bmatrix}
a_0 \\ a_1 \\ a_2 \\ \vdots \\ a_m
\end{bmatrix}
=
\begin{bmatrix}
\sum\limits_{j=0}^{n} y_j \\
\sum\limits_{j=0}^{n} x_j y_j \\
\sum\limits_{j=0}^{n} x_j^2 y_j \\
\vdots \\
\sum\limits_{j=0}^{n} x_j^m y_j
\end{bmatrix}
$$

Wherein, $n + 1$ is the number of the contact points, and $(x_j, y_j)$ represents the coordinate value of the contact point. An equation of the tooth profile curve can be solved by substituting the coordinate values of the contact points:

$$\begin{cases} x_{2n} = v_2 \\ y_{2n} = a_0 + a_1 v_2 + a_2 v_2{}^2 + ... + a_m v_2{}^m \end{cases}$$

Wherein, $v_2$ is an independent variable parameter of the tooth profile curve; $a_0, a_1, ..., a_m$ are coefficients of the equation of the tooth profile curve.

(2) : Suppose that, the angle between two contact points is $2\theta_j$ an equation of the tooth profile curve between the two points is

$$C_2 \qquad \begin{cases} x_{2n} = v_2 \cos\alpha - \dfrac{v_2{}^2}{2p}\sin\alpha + l\sin\alpha \\[2mm] y_{2n} = v_2 \sin\alpha + \dfrac{v_2{}^2}{2p}\cos\alpha - l\cos\alpha \\[2mm] z_{2n} = 0 \end{cases}$$

wherein, $v_2$ is a parameter of a parabolic curve; $\alpha$ is an angle between the axis $y_{2n}$ and the vertex of the parabolic curve; $l$ is the distance between the vertex of the parabolic curve and the origin of coordinate system of normal plane, and $l = \dfrac{\rho_i \sin^2\theta_j}{2\cos\theta_j} + \rho_i \cos\theta_j$ , is an angle between a contact point of the parabolic curve and the vertex.

An equation of the tooth profile curve $C_2(v_2)$ will be obtained by connecting all equations of tooth profile curves.

A meshing tooth surface of said convex gear 1 is generated by the movement of the tooth profile curve $C_1(v_1)$ along the equidistant curve $\Gamma'_1$, and its equation is

$$\Sigma_1 \qquad \qquad r = r(u, v_1)$$

A meshing tooth surface of said concave gear 2 is generated by the movement of the tooth profile curve $C_2(v_2)$ along the equidistant curve $\Gamma'_2$, and its equation is

$$\Sigma_2 \qquad \qquad r = r(u, v_2)$$

When parameter $u$ is a constant, that is $u = u_0$, and parameter $vj(j=1,2)$ varies, curves $r(u_0, v_j)$ on the curved surface will be obtained, and this curve is a tooth profile curve on the normal plane; when the parameter $v_j$ is a constant, that is $v = v_{j0}$, and the parameter $u$ varies, curves $r(u, v_0)$ on the curved surface will be obtained, and if $v_{j0}$ is a meshing point, the curve $r(u, v_{j0})$ is a contact curve, if not, the curve $r(u, v_{j0})$ does not participate in meshing.

In the present embodiment, the selected smooth curve is a cylindrical helix $\Gamma_i$, and its curve equation is

$$\begin{cases} x_1 = R_i \cos u \\ y_1 = R_i \sin u \\ z_1 = p_i u \end{cases}$$

Wherein, $u$ is an independent variable parameter of the cylindrical helix; $R_i$ is a radius of a cylindrical surface where the cylindrical helix is located; and $P_i$ is a screw parameter of the cylindrical helix.

FIG. 2 shows generated different cylindrical helix when parameter $R_i$ varies. As shown in FIG. 1, there are a great many of normal lines on the curve $\Gamma_i$. To obtain a stable transmission ratio of the meshing pair, the normal lines of selected contact points are all pass through the pitch point.

Further, an equidistant curve of pitch cylindrical helix is obtained by the movement of cylindrical helix $\Gamma_i$ along the direction of its given normal line, and its equation is

$$\Gamma'_1 \quad \begin{cases} x_1 = r_1 \cos u \\ y_1 = r_1 \sin u \\ z_1 = p_i u \end{cases}$$

Wherein, $u$ is an independent variable parameter of the curve; $r_1 = \sqrt{R_i^2 - (\rho_i \cos \alpha_i \cos \beta)^2} - \rho_i \sin \alpha_i$, wherein $\rho_i$ is the equidistant distance; $\alpha_i$ is the normal pressure angle of the contact point; and $p_i = r_1 \cot \beta$, wherein $\beta$ is an helix angle.

A normal tooth profile curve $C_1$ of the convex gear 1 is a circle centered on the pitch point, and its equation under the coordinate system of normal plane is

$$\begin{cases} x_n = \rho_i \sin v_1 \\ y_n = \rho_i \cos v_1 \\ z_n = 0 \end{cases}$$

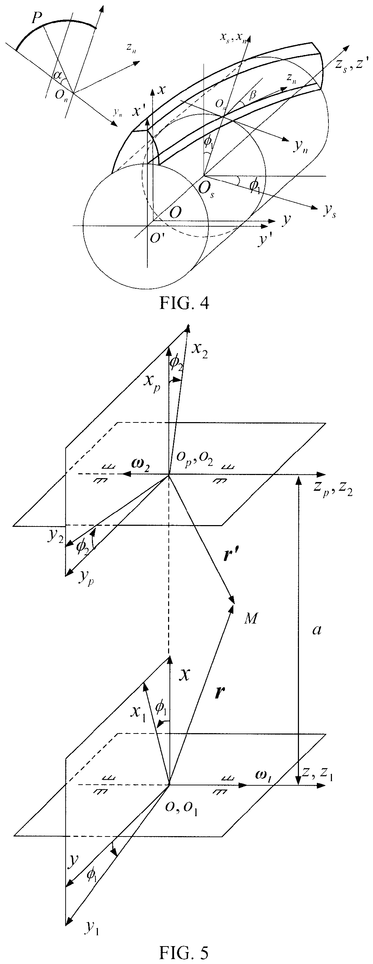

wherein, $\rho_a$ is a radius of the circle; $v_1$ is an angle between the coordinate axis $y_n$ and the normal line of the contact point. FIG. 3 shows a schematic view of the tooth profile curve in the normal coordinate system $S_n(O_n\text{-}x_ny_nz_n)$. FIG. 4 shows a schematic view of the generation of the meshing tooth surfaces. The coordinate system $S_n(O_n\text{-}x_ny_nz_n)$ is a normal coordinate system. The coordinate axis $x_n$ across the intersection point $O_n$ of the radial line of a circular arc of the gear and a pitch cylinder. The axis $z_n$ is along the direction of the tangent vector of the helix. The plane $x_nO_ny_n$ is the normal plane of the gear. The coordinate system $S_n(O_n\text{-}x_ny_nz_n)$ is an end face coordinate system. The axis $x_s$ passes through point $O_n$.

The axis $z_s$ coincides with the gear axis. The axis $y_s$ passes through gear axis, and the distance between axis $y_s$, and $y_n$ is the pith radius $r_1$ of gear in the direction of height. Plane $x_sO_sy_s$ is parallel with an end face of the gear. The angle of planes $x_nO_ny_n$ and $x_sO_sy_s$ is the helix angle $\beta$ of the gear. The coordinate system $S_1(O_1\text{-}x_1,y_1,z_1)$ is the fixed to the gear. The axis $z_1$ coincides with the gear axis. Plane $x_1O_1y_1$ coincides with the end face of the gear. The axis $x_1$ across intersection point $O_n$ of the radial line of the tooth profile and the pitch cylinder, and does not coincide with the symmetric line of the gear. Coordinate system $S_s$ has a helix motion in the coordinate system $S_1$, when rotating by angle $\phi_1$, it moves forward by a distance $r_1 \cot \beta \cdot \phi_1$.

The meshing tooth surface is obtained by the movement of the tooth profile curve along the helix on the pitch cylinder, and its equation is

$$\begin{cases} x_1 = (\rho_i \sin \alpha + r_1) \cos \phi_1 + \rho_i \cos \alpha \cos \beta \sin \phi_1 \\ y_1 = (\rho_i \sin \alpha + r_1) \sin \phi_1 - \rho_i \cos \alpha \cos \beta \cos \phi_1 \\ z_1 = r_1 \cot \beta \cdot \phi_1 + \rho_i \cos \alpha \sin \beta \end{cases}$$

FIG. 5 shows a schematic view of the coordinate systems of curve conjugating. The coordinate systems $S(O\text{-}x,y,z)$ and $S_p(O_p\text{-}x_p,y_p,z_p)$ are two coordinate systems fixed in the space. The axis z coincides with the rotation axis of the gear 1. The axis $z_p$ coincides with the rotation axis of the gear 2. The axes z and $z_p$ are parallel with each other. The axes x and $x_P$ coincide with each other. Their direction is the shortest distance direction of two axes. $OO_P$ is equal to the shortest distance, that is center distance $a$. The coordinate system $S_1(O_1\text{-}x_1,y_1,z_1)$ is connected to the gear 1 and coordinate system $S_2(O_2\text{-}x_2,y_2,z_2)$ is connected to the gear 2. At the initial state, they coincide with $S$, $S_p$ respectively. The gear 1 rotates about the axis z in an uniform angular speed $\omega_1$, and the gear 2 rotates about the axis $z_P$ in an uniform angular speed $\omega_2$. $\omega_1$ is the same with the negative direction of the axis z, and $\omega_2$ is opposite to the negative direction of axis $z_P$. After a period of time from the initial position, $S_1$ and $S_2$ move to the positions in the Fig. The gear 1 rotates about axis z by angle $\varphi_1$, the gear 2 rotates about axis $z_P$ by angle $\varphi_2$.

Suppose the curve $\Gamma_i$ is the contact curve of the gear 1, the conjugate curve $\Gamma_{i+1}$ of gear 2 can be generated based on the principle of conjugate curves, and its equation in the coordinate systems $S_2$ is

$$\begin{cases} x_2 = \cos\varphi_1 \cos\varphi_2 x_1 - \sin\varphi_1 \cos\varphi_2 y_1 + \sin\varphi_2 z_1 - a\cos\varphi_2 \\ y_2 = \cos\varphi_1 \sin\varphi_2 x_1 - \sin\varphi_1 \sin\varphi_2 y_1 - \cos\varphi_2 z_1 - a\sin\varphi_2 \\ z_2 = \sin\varphi_1 x_1 + \cos\varphi_1 y_1 \\ \Phi = \mathbf{n} \bullet \mathbf{v}^{(12)} = 0 \end{cases}$$

According to the principle of conjugate curves, a conjugate curve $\Gamma_{i+1}$ of the cylinder helix $\Gamma_i$ is also a cylinder helix, so the above equation can be simplified as

$$\begin{cases} x_2 = R_{i+1} \cos u \\ y_2 = R_{i+1} \sin u \\ z_2 = p_{i+1} u \end{cases}$$

Wherein, $u$ is an independent variable parameter of the curve; $R_{i+1}$ is a radius of a cylindrical surface; and $p_{i+1}$ is a screw parameter.

An equation of an equidistant curve $\Gamma'_2$ corresponding to the contact curve $\Gamma_{i+1}$ is

$$\Gamma'_2 \qquad \begin{cases} x_1 = r_2 \cos u \\ y_1 = r_2 \sin u \\ z_1 = p_2 u \end{cases}$$

Wherein, $u$ is an independent variable parameter of the curve; $r_2 = \sqrt{R_{i+1}^2 - \left(\rho_{i+1}\cos\alpha_i \cos\beta\right)^2} - \rho_{i+1}\sin\alpha_i$, and $r_2 = i_{21} \times r_1$, wherein $p_{i+1}$ is the equidistant distance between the contact curve $\Gamma_{i+1}$ and the equidistant curve $\Gamma_2$; $\alpha_{i+1}$ is a normal pressure angle; and $_{p2}$ is a screw parameter, and $p_2 = r_2 \cos\beta$.

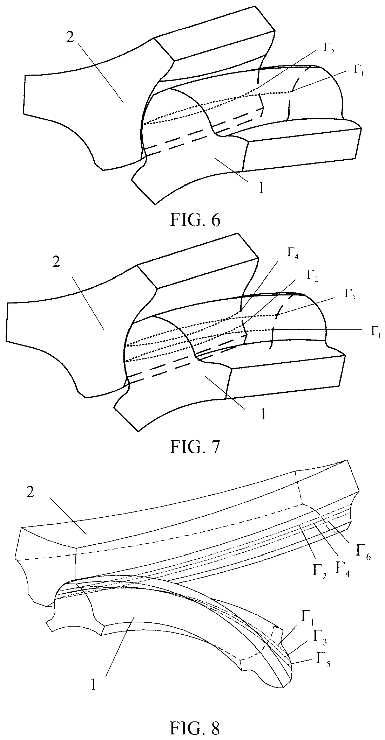

FIG. 6 shows a schematic view of the conjugate curve gear when $i=1$, there is one contact point on the tooth profile curve on the normal plane, and the circle is selected to be the tooth profile curve on the normal plane of the concave gear 2; FIG. 7 shows a schematic view of the conjugate curve gear when $i=3$, there are two contact points on the tooth profile curve on the normal plane, and a parabolic curve is selected to be the tooth profile curve on the normal plane of the concave gear 2; FIG. 8 shows a schematic view of the conjugate curve gear when $i \geq 5$, there are three or more contact points on the tooth profile curve on the normal plane, and a spline curve is selected to be a tooth profile curve on the normal plane of the concave gear2.

When $i=1$, an equation of the tooth profile curve of said the concave gear 2 under coordinate system of normal plane is

$$C_2 \qquad \begin{cases} x_{n2} = \rho_2 \sin v_2 + e \\ y_{n2} = -\rho_2 \cos v_2 + l \\ z_{n2} = 0 \end{cases}$$

wherein, $v_2$ is an independent variable parameter of the circle, $\rho_2$ is a radius of the circle, $(e,l)$ is the coordinate value of the center of the circle.

When $i=3$, an equation of the tooth profile curve of said concave gear 2 under coordinate system of normal plane is

$$C_2 \qquad \begin{cases} x_{2n} = v_2 \cos\alpha - \dfrac{v_2^2}{2p}\sin\alpha + l\sin\alpha \\ y_{2n} = v_2 \sin\alpha + \dfrac{v_2^2}{2p}\cos\alpha - l\cos\alpha \\ z_{2n} = 0 \end{cases}$$

wherein, $v_2$ is an independent variable parameter of a parabolic curve; $\alpha$ is an angle between the axis $y_{2n}$ and the vertex

of the parabolic curve; $l$ is the distance between the vertex of the parabolic curve and the origin of coordinate system of normal plane, and $l = \dfrac{\rho_i \sin^2 \theta}{2\cos\theta} + \rho_i \cos\theta$, $\theta$,is an angle between a contact point of the parabolic curve and the vertex, and $\rho_a$, is a radius of the tooth profile curve $_{C1}(v_1)$ of the convex gear

When $i = 2n + 1 (n \geq 2)$, there are two ways to obtain the tooth profile curve of the concave gear 2.

(1) One is that: Suppose that coordinate values of contact points on the contact curve of the concave gear 2 are $(x_0, y_0)$, $(x_1, y_1)$, $(x_2, y_2)$,..., $(x_{n-1}, y_{n-1})$, the tooth profile curve fitting is used by the least square method, and an equation of tooth profile curve is:

$$\begin{bmatrix} n+1 & \sum\limits_{j=0}^{n} x_j & \sum\limits_{j=0}^{n} x_j^2 & \cdots & \sum\limits_{j=0}^{n} x_j^m \\[2mm] \sum\limits_{j=0}^{n} x_j & \sum\limits_{j=0}^{n} x_j^2 & \sum\limits_{j=0}^{n} x_i^3 & \cdots & \sum\limits_{j=0}^{n} x_i^{m+1} \\[2mm] \sum\limits_{j=0}^{n} x_i^2 & \sum\limits_{j=0}^{n} x_j^3 & \sum\limits_{j=0}^{n} x_j^4 & \cdots & \sum\limits_{i=0}^{n} x_i^{m+2} \\[2mm] \vdots & \vdots & \vdots & & \vdots \\[2mm] \sum\limits_{j=0}^{n} x_i^m & \sum\limits_{j=0}^{n} x_i^{m+1} & \sum\limits_{j=0}^{n} x_j^{m+2} & \cdots & \sum\limits_{j=0}^{n} x_j^{2m} \end{bmatrix} \begin{bmatrix} a_0 \\ a_1 \\ a_2 \\ \vdots \\ a_m \end{bmatrix} = \begin{bmatrix} \sum\limits_{j=0}^{n} y_j \\[2mm] \sum\limits_{j=0}^{n} x_j . y_j \\[2mm] \sum\limits_{j=0}^{n} x_j^2 y_j \\[2mm] \vdots \\[2mm] \sum\limits_{j=0}^{n} x_j^m y_j \end{bmatrix}$$

Wherein, $n+1$ is the number of contact points, and $(x_j, y_j)$ represents the coordinate value of the contact point. An equation of the tooth profile curve can be solved by substituting the coordinate values of the contact points:

$$\begin{cases} x_{2n} = v_2 \\ y_{2n} = a_0 + a_1 v_2 + a_2 v_2^2 + \ldots + a_m v_2^m \end{cases}$$

(2) Second: Suppose that, the angle between two contact points is $2\theta_j$ an equation of the tooth profile curve between the two points is

$$C_2 \quad \begin{cases} x_{2n} = v_2 \cos\alpha - \dfrac{v_2^2}{2p}\sin\alpha + l\sin\alpha \\[2mm] y_{2n} = v_2 \sin\alpha + \dfrac{v_2^2}{2p}\cos\alpha - l\cos\alpha \\[2mm] z_{2n} = 0 \end{cases}$$

wherein, $v_2$ a parameter of a parabolic curve; $\alpha$ is an angle between the axis $y_{2n}$ and the vertex of the parabolic curve; $l$ is the distance between the vertex of the parabolic curve and the origin of coordinate system of normal plane, and $l = \dfrac{\rho_a \sin^2 \theta_j}{2\cos\theta_j} + \rho_a \cos\theta_j$, $\theta_j$ is an angle between a contact point of the parabolic curve and the vertex.

The meshing tooth surface of said concave gear 2 can be generated by the helix movement of the tooth profile curve along the pitch cylinder $O_n$, and its equation is

$$\begin{cases} x_2 = (x_{2n} + r_2)\cos\phi_2 + y_{2n}\cos\beta\sin\phi_2 \\ y_2 = (x_{2n} + r_2)\sin\phi_2 + y_{2n}\cos\beta\cos\phi_2 \\ z_2 = r_2 \cot\beta \cdot \phi_2 - y_{2n}\sin\beta \end{cases}$$

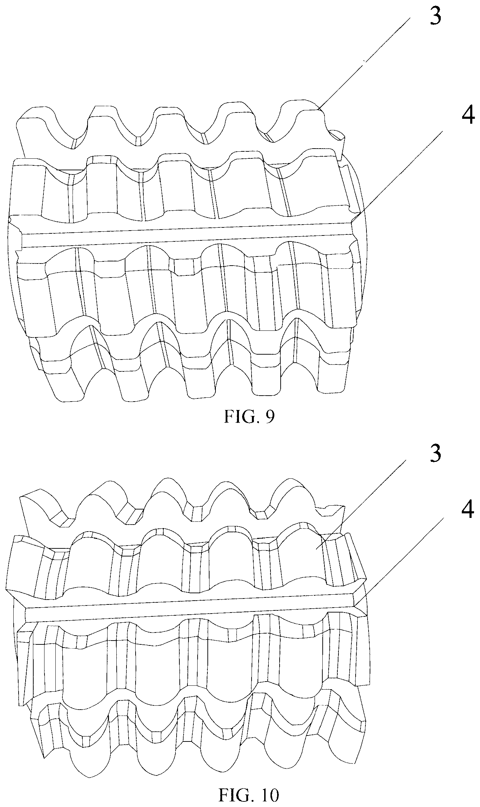

Embodiments for carrying out the invention, a machining tool to manufacture a point contact gear based on conjugate curves will be detailed explained. FIG. 9 is a structural schematic view of a machining tool for manufacturing a point contact convex gear based on conjugate curves according to the present invention. FIG. 10 shows a structural schematic view of a machining tool for manufacturing a point contact concave gear based on conjugate curves according to the present invention.

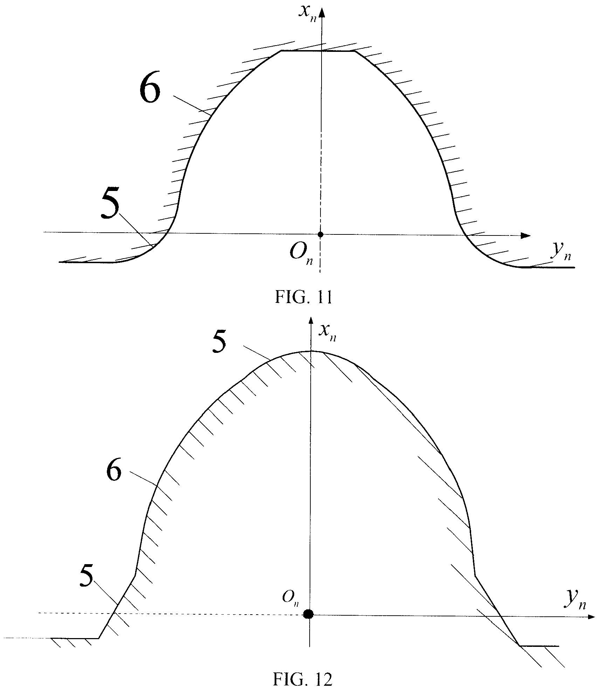

FIG. 11 is a view of a normal tooth profile of a machining tool for manufacturing a point contact convex gear based on conjugate curves according to the present invention. FIG. 12 is a view of a normal tooth profile of a machining tool for manufacturing a point contact concave gear based on conjugate curves according to the present invention. As shown in the figure, a machining tool to manufacture the point contact gear based on conjugate curves according to the embodiment, includes a cutter shaft 4, and several cutting teeth 3 fixed long the circumferential direction of said cutter shaft 4; wherein a normal tooth profile curve of said cutting tooth 3 includes working section 6 and transition section 5; said transition edge 5 is a straight line or a circular arc, the transition section 5 on tooth top of the normal tooth profile curve of the cutting tooth 3 of the machining tool for the convex gear 1 is a circular arc, the transition section 5 on tooth top of the normal tooth profile curve of the cutting tooth 3 of the machining tool for the concave gear 2 is a circular arc, the transition section 6 on the tooth bottom is a straight line.

A curve equation of said working section 6 is

$$C_i \qquad \begin{cases} x_n = x_n(v_i) \\ y_n = y_n(v_i) \\ z_n = z_n(v_i) \end{cases}$$

Wherein, $v_i$ is an independent variable parameter of the curve, when $i = 1$, the curve equation of tooth profile of the convex gear is represented, and when $i = 2$, the curve equation of tooth profile of the concave gear is represented. The machining tool to generate a point contact gear based on conjugate curves according to the present invention can use the existing machine tool to manufacture the point contact gear based on conjugate curves according to the present invention conveniently and quickly, which reduces the manufacture cost and accelerates the application and use of the point contact gear based on conjugate curves according to the present invention.

**Claims**

1. A point contact gear based on conjugate curves, **characterized in that**:
   a curve equation of a contact curve composed of meshing points on tooth surfaces of the gear is

$$\begin{cases} x_1 = x_i(u) \\ y_1 = y_i(u) \\ z_1 = z_i(u) \end{cases} \qquad u_{min} \leq u \leq u_{max} \qquad (i = 1, 3, 5, ..., 2n+1)$$

   wherein, $u$ is an independent variable parameter of the curve; $u_{min}$ and $u_{max}$ is a value range of the contact curve, viz. from a parameter of the curve at engaging-in point of the tooth profile to a parameter of the curve at engaging-out point of the tooth profile; the subscript $i$ represents different contact curves;
   an equation of an equidistant curve of said contact curve along the direction of common normal line of the tooth surfaces is

$$\begin{cases} x_{1\rho} = x_1 + \rho_i \cdot n_{xi} \\ y_{1\rho} = y_1 + \rho_i \cdot n_{yi} \\ z_{1\rho} = z_1 + \rho_i \cdot n_{zi} \end{cases}$$

   wherein, $\rho_i$ is a distance between the contact curve and the equidistant curve;
   $n_{xi}$, $n_{yi}$ and $n_{zi}$ are decomposed normal vectors of unit vector of the common normal line at the meshing point along the directions of axes of the coordinate system regarding to the gear;
   an equation of a tooth profile curve of the gear under the coordinate system of normal plane of the contact curve is

$$\begin{cases} x_{n1} = x_{n1}(v_1) \\ y_{n1} = y_{n1}(v_1) \\ z_{n1} = z_{n1}(v_1) \end{cases}$$

Wherein, $v_1$ is an independent variable parameter of the curve.

2. The point contact gear based on conjugate curves according to claim 1, **characterized in that**:
a meshing tooth surface of said gear is obtained by the movement of the tooth profile curve along the equidistant curve, and its equation is:

$$r = r(u, v_1)$$

wherein, $u$ is an independent variable parameter of the contact curve, and $v_1$ is an independent variable parameter of the tooth profile curve.

3. A point contact gear meshing pair based on conjugate curves, **characterized in that**:

the meshing pair includes a convex gear and a concave gear which mesh with each other in point contact, and a curve equation of a contact curve $\Gamma_i$ composed of meshing points on tooth surface of said convex gear is:

$$\begin{cases} x_1 = x_i(u) \\ y_1 = y_i(u) \qquad u_{min} \le u \le u_{max} \qquad (i = 1,3,5,...,2n+1) \\ z_1 = z_i(u) \end{cases}$$

wherein, $u$ is an independent variable parameter of the curve; $u_{min}$ and $u_{max}$ is a value range of the contact curve, viz. from a parameter of the curve at engaging-in point of the tooth profile to a parameter of the curve at engaging-out point of the tooth profile; the subscript $i$ represents different contact curves;

according to the principle of conjugate curves, a curve equation of a contact curve $\Gamma_{i,1}$ composed of meshing points on tooth surface of said concave gear is:

$$\begin{cases} x_2 = \cos\varphi_1 \cos\varphi_2 x_1 - \sin\varphi_1 \cos\varphi_2 y_1 + \sin\varphi_2 z_1 - a\cos\varphi_2 \\ y_2 = \cos\varphi_1 \sin\varphi_2 x_1 - \sin\varphi_1 \sin\varphi_2 y_1 - \cos\varphi_2 z_1 - a\sin\varphi_2 \\ z_2 = \sin\varphi_1 x_1 + \cos\varphi_1 y_1 \\ \Phi = n \bullet v^{(12)} = 0 \end{cases}$$

wherein, $\varphi_1$ and $\varphi_2$ are rotation angles of the convex gear and concave gear, respectively, and $\varphi_2 = i_{21}\varphi_1$, wherein $i_{21}$ is a transmission ratio; $a$ is a standard center distance of a gear transmission; $n$ is a normal vector of the conjugate curves at the meshing point along the direction of the common normal line; and $v^{(12)}$ is a velocity vector of relative movement of the meshing pair at the meshing point;
an equation of an equidistant curve $\Gamma_1'$ corresponding to the contact curve $\Gamma_i$ of said convex gear is

$$\Gamma'_1 \qquad \begin{cases} x_{1\rho} = x_1 + \rho_i \bullet n_{xi} \\ y_{1\rho} = y_1 + \rho_i \bullet n_{yi} \\ z_{1\rho} = z_1 + \rho_i \bullet n_{zi} \end{cases}$$

wherein, $\rho_i$ is a distance between the contact curve $\Gamma_i$ and the equidistant curve $\Gamma_1'$; $n_{xi}$, $n_{yi}$ and $n_{zi}$ are decomposed normal vectors of unit vector of given normal line at the meshing point along the directions of axes of the coordinate system regarding to the convex gear.;

an equation of an equidistant curve $\Gamma'_2$ corresponding to the contact curve $\Gamma_{i+1}$ of said concave gear is

$$\Gamma'_2 \quad \begin{cases} x_{2\rho} = x_2 + \rho_{i+1} \cdot n_{xi+1} \\ y_{2\rho} = y_2 + \rho_{i+1} \cdot n_{yi+1} \\ z_{2\rho} = z_2 + \rho_{i+1} \cdot n_{zi+1} \end{cases}$$

wherein, $\rho_{i+1}$ is a distance between the contact curve $\Gamma_{i+1}$ and the equidistant curve $\Gamma'_2$; $n_{xi+1}$, $n_{yi+1}$ and $n_{zi+1}$ are decomposed normal vectors of unit vector of given normal line at the meshing point along the direction of axes of the coordinate system regarding to the concave gear;
a tooth profile curve $C_1(v_1)$ of said convex gear is a curve in the normal plane of the contact curve $\Gamma_i$, when $i = 1$, there is only one contact curve on the meshing tooth surface, that is there is one contact point on the tooth profile curve; when $i = 3$, there are two contact curves on the meshing tooth surface, that is there are two contact points on the tooth profile curve; when $i = 2n + 1(n \geq 2)$, there are $n + 1$ contact curves on the meshing tooth surface, and there are $n + 1$ contact points on the tooth profile curve;
an equation of the tooth profile curve $C_1(v_1)$ of said convex gear under coordinate system of normal plane of the contact curve $\Gamma_i$ is

$$C_1 \quad \begin{cases} x_{n1} = x_{n1}(v_1) \\ y_{n1} = y_{n1}(v_1) \\ z_{n1} = z_{n1}(v_1) \end{cases}$$

wherein, $v_1$ is an independent variable parameter of the tooth profile curve $C_1(v_1)$;
an equation of a tooth profile curve $C_2(v_2)$ of said concave gear under coordinate system of normal plane of the contact curve $\Gamma_{i+1}$ is

$$C_2 \quad \begin{cases} x_{n2} = x_{n2}(v_2) \\ y_{n2} = y_{n2}(v_2) \\ z_{n2} = z_{n2}(v_2) \end{cases}$$

wherein, $v_2$ is an independent variable parameter of the tooth profile curve $C_2(v2)$ ;
the meshing tooth surface of said convex gear is generated by the movement of the tooth profile curve $C_1(v_1)$ along the equidistant curve $\Gamma'_1$, and its equation is

$$\Sigma_1 \qquad r = r(u, v_1)$$

wherein, $u$ is an independent variable parameter of the contact curve, and $v_1$ is an independent variable parameter of the tooth profile curve $C_1(v_1)$;
the meshing tooth surface of said concave gear is generated by the movement of the tooth profile curve $C_2(v_2)$ along the equidistant curve $\Gamma'_2$, and its equation is

$$\Sigma_2 \qquad r = r(u, v_2)$$

wherein, $u$ is an independent variable parameter of the contact curve, and $v_2$ is an independent variable parameter of the tooth profile curve $C_2(v_2)$.

4. The point contact gear meshing pair based on conjugate curves according to claim 3, **characterized in that**: an equation of the tooth profile curve $C_1(v_1)$ of said convex gear under coordinate system of normal plane of the contact curve $\Gamma_i$ is

$$C_1 \begin{cases} x_{n1} = \rho_a \sin v_1 \\ y_{n1} = -\rho_a \cos v_1 \\ z_{n1} = 0 \end{cases}$$

wherein, $\rho_a$ is a radius of the tooth profile curve; $v_1$ is an angle between the coordinate axis $x_{n1}$ and the normal line of any point on the tooth profile curve.

**5.** The point contact gear meshing pair based on conjugate curves according to claim 4, **characterized in that**: an equation of the tooth profile curve $C_2(v_2)$ of said concave gear under coordinate system of normal plane of the contact curve $\Gamma_{i+1}$ is

$$C_2 \begin{cases} x_{n2} = \rho_2 \sin v_2 + e \\ y_{n2} = -\rho_2 \cos v_2 + l_f \\ z_{n2} = 0 \end{cases}$$

wherein, $\rho_2$ is a radius of the tooth profile curve; $v_2$ is an angle between the coordinate axis $x_n$ and the normal line of any point on the tooth profile curve; $e$ is a coordinate value of tooth profile center on the coordinate axis $x_n$ ; $l_f$ is a coordinate value of tooth profile center on the coordinate axis $y_n$.

**6.** The point contact gear meshing pair based on conjugate curves according to claim 4, **characterized in that**: an equation of the tooth profile curve $C_2(v_2)$ of said concave gear under coordinate system of normal plane of the contact curve $\Gamma_{i+1}$ is

$$C_2 \begin{cases} x_{2n} = v_2 \cos\alpha - \dfrac{v_2^{\,2}}{2p}\sin\alpha + l\sin\alpha \\ y_{2n} = v_2 \sin\alpha + \dfrac{v_2^{\,2}}{2p}\cos\alpha - l\cos\alpha \\ z_{2n} = 0 \end{cases}$$

wherein $v_2$ is an independent variable parameter of a parabolic curve; $\alpha$ is an angle between the axis $y_{2n}$ and the vertex of the parabolic curve; $l$ is a distance between the vertex of the parabolic curve and the origin of coordinate system of normal plane, and $l = \dfrac{\rho_a \sin^2\theta_j}{2\cos\theta_j} + \rho_a \cos\theta_j$ , $\theta_j$ is an angle between a contact point of the parabolic curve and the vertex, and $\rho_a$ is a radius of the tooth profile curve $C_1(v_1)$ of the convex teeth

**7.** The point contact gear meshing pair based on conjugate curves according to claim 4, **characterized in that**: an equation of the tooth profile curve $C_2(v_2)$ of said concave gear under coordinate system of normal plane of the contact curve $\Gamma_{i+1}$ is

$$\begin{cases} x_{2n} = v_2 \\ y_{2n} = a_0 + a_1 v_2 + a_2 v_2^{\,2} + \dots + a_m v_2^{\,m} \end{cases}$$

wherein, $v_2$ is an independent variable parameter of the tooth profile curve; $a_0, a_1, \dots, a_m$ are coefficients of the equation of the tooth profile curve.

**8.** The point contact gear meshing pair based on conjugate curves according to claim 3, **characterized in that**: the curve equation of the contact curve $\Gamma_i$ of said convex gear is a cylindrical helix, and its curve equation is

$$\begin{cases} x_1 = R_i \cos u \\ y_1 = R_i \sin u \\ z_1 = p_i u \end{cases}$$

wherein, $u$ is an independent variable parameter of the cylindrical helix; $R_i$ is a radius of a cylindrical surface where the cylindrical helix is located; and $P_i$ is a screw parameter of the cylindrical helix;

according to the principle of conjugate curves, an curve equation of the contact curve $\Gamma_{i+1}$ of said concave gear is

$$\begin{cases} x_2 = R_{i+1} \cos u \\ y_2 = R_{i+1} \sin u \\ z_2 = p_{i+1} u \end{cases}$$

wherein, $u$ is an independent variable parameter of the curve; $R_{i+1}$ is a radius of a cylinder; and $p_{i+1}$ is a screw parameter;

an equation of the equidistant curve $\Gamma'_1$ corresponding to the contact curve $\Gamma_i$ is

$$\Gamma'_1 \qquad \begin{cases} x_1 = r_1 \cos u \\ y_1 = r_1 \sin u \\ z_1 = p_1 u \end{cases}$$

wherein, $u$ is an independent variable parameter of the curve;

$r_1 = \sqrt{R_i^2 - \left( \rho_i \cos \alpha_i \cos \beta \right)^2} - \rho_i \sin \alpha_i$ , wherein $\rho_i$ is an equidistant distance; $\alpha_i$ is the normal pressure angle of the contact point; and $p_i = r_1 \cot \beta$, wherein $\beta$ is an helix angle;

an equation of the equidistant curve $\Gamma'_2$ corresponding to the contact curve $\Gamma_{i-1}$ is

$$\Gamma'_2 \qquad \begin{cases} x_1 = r_2 \cos u \\ y_1 = r_2 \sin u \\ z_1 = p_2 u \end{cases}$$

wherein, $u$ is an independent variable parameter of the curve;

$r_2 = \sqrt{R_{i+1}^2 - \left( \rho_{i+1} \cos \alpha_i \cos \beta \right)^2} - \rho_{i+1} \sin \alpha_i$ , and $r_2 = i_{21} \times r_1$ ; wherein $\rho_{i+1}$ is an equidistant distance between the contact curve $\Gamma_{i-1}$ and the equidistant curve $\Gamma'_2$; $\alpha_{i+1}$ is a normal pressure angle; and $p_2$ is a screw parameter, and $p_2 = r_2 \cos \beta$ ;

an equation of the tooth profile curve $C_1(v_1)$ of said convex gear under coordinate system of normal plane of the contact curve $\Gamma_i$ is

$$C_1 \qquad \begin{cases} x_{n1} = x_{n1}(v_1) \\ y_{n1} = y_{n1}(v_1) \\ z_{n1} = z_{n1}(v_1) \end{cases}$$

wherein, $v_1$ is an independent variable parameter of the tooth profile curve $C_1$;

an equation of the tooth profile curve $C_2(v_2)$ of said concave gear under coordinate system of normal plane of the contact curve $\Gamma_{i+1}$ is

$$C_2 \qquad \begin{cases} x_{n2} = x_{n2}(v_2) \\ y_{n2} = y_{n2}(v_2) \\ z_{n2} = z_{n2}(v_2) \end{cases}$$

wherein, $v_2$ is an independent variable parameter of the tooth profile curve $C_2$ ;

a meshing tooth surface of said convex gear is generated by the movement of the tooth profile curve $C_1(v_1)$

along the equidistant curve $\Gamma'_1$, and its equation is

$$\begin{cases} x_1 = (x_{1n} + r_1)\cos\phi_1 + y_{1n}\cos\beta\sin\phi_1 \\ y_1 = (x_{1n} + r_1)\sin\phi_1 + y_{1n}\cos\beta\cos\phi_1 \\ z_1 = r_1\cot\beta\bullet\phi_1 - y_{1n}\sin\beta \end{cases}$$

wherein, $r_1$ is a pitch radius of the convex gear; $\phi_1$ is a rotation angle of the convex gear; and $\beta$ is the helix angle of the gear;
a meshing tooth surface of said concave gear is generated by the movement of the tooth profile curve $C_2(v_2)$ along the equidistant curve $\Gamma_2'$, and its equation is

$$\begin{cases} x_2 = (x_{2n} + r_2)\cos\phi_2 + y_{2n}\cos\beta\sin\phi_2 \\ y_2 = (x_{2n} + r_2)\sin\phi_2 + y_{2n}\cos\beta\cos\phi_2 \\ z_2 = r_2\cot\beta\bullet\phi_2 - y_{2n}\sin\beta \end{cases}$$

wherein, $r_2$ is a pitch radius of the concave gear; $\phi_2$ is a rotation angle of the concave gear, and $\phi_2 = i_{21}\phi_1$, wherein $i_{21}$ is a transmission ratio of the gear; and $\beta$ is a helix angle of the gear.

9. A machining tool to manufacture the point contact gear meshing pairs according to any one of claim 3 to claim 8, **characterized in that**:

including a cutter shaft, and several cutting teeth fixed along the circumferential direction of said cutter shaft;
wherein a normal tooth profile curve of said cutting tooth includes working section and transition section;
said transition section is a straight line or a circular arc;
a curve equation of said working section is

$$C_i \qquad \begin{cases} x_n = x_n(v_i) \\ y_n = y_n(v_i) \\ z_n = z_n(v_i) \end{cases}$$

wherein, $v_i$ is an independent variable parameter of the curve, when $i = 1$, the curve equation of tooth profile of the convex gear is represented, and when $i = 2$, the curve equation of tooth profile of the concave gear is represented.


**Patentansprüche**

1. Punktkontaktgetriebe basierend auf konjugierten Kurven, **dadurch gekennzeichnet, dass**:
eine Kurvengleichung einer Kontaktkurve, die aus Eingriffspunkten auf Zahnflächen des Getriebes gebildet ist,

$$\begin{cases} x_1 = x_i(u) \\ y_1 = y_i(u) \qquad u_{\min} \le u \le u_{\max} \qquad (i = 1,3,5,...,2n+1) \\ z_1 = z_i(u) \end{cases}$$

ist, wobei $u$ ein unabhängiger variabler Parameter der Kurve ist; $u_{min}$ und $u_{max}$ ein Wertebereich der Kontaktkurve ist, d.h. von einem Parameter der Kurve an dem Punkt des in Eingriff Gelangens des Zahnprofils zu einem Parameter der Kurve an dem Punkt des Lösens aus dem Eingriff des Zahnprofils; wobei das tiefgestellte $i$ verschiedene Kontaktkurven darstellt;
eine Gleichung einer äquidistanten Kurve der Kontaktkurve entlang der Richtung der gemeinsamen Normallinie der Zahnflächen

$$\begin{cases} x_{1\rho} = x_1 + \rho_i \bullet n_{xi} \\ y_{1\rho} = y_1 + \rho_i \bullet n_{yi} \\ z_{1\rho} = z_1 + \rho_i \bullet n_{zi} \end{cases}$$

ist, wobei $\rho_i$ ein Abstand zwischen der Kontaktkurve und der äquidistanten Kurve ist; $n_{xi}$, $n_{yi}$ und $n_{zi}$ zerlegte Normalenvektoren eines Einheitsvektors der gemeinsamen Normallinie an dem Eingriffspunkt entlang der Richtungen von Achsen des Koordinatensystems in Bezug auf das Getriebe sind;
eine Gleichung einer Zahnprofilkurve des Getriebes unter dem Koordinatensystem einer Normalebene der Kontaktkurve

$$\begin{cases} x_{n1} = x_{n1}(v_1) \\ y_{n1} = y_{n1}(v_1) \\ z_{n1} = z_{n1}(v_1) \end{cases}$$

ist, wobei $v_1$ ein unabhängiger variabler Parameter der Kurve ist.

2. Punktkontaktgetriebe basierend auf konjugierten Kurven nach Anspruch 1, **dadurch gekennzeichnet, dass**:
eine Eingriffszahnfläche des Getriebes durch die Bewegung der Zahnprofilkurve entlang der äquidistanten Kurve erlangt wird, und ihre Gleichung:

$$r = r(u,\ v_1)$$

ist, wobei $u$ ein unabhängiger variabler Parameter der Kontaktkurve ist, und $v_1$ ein unabhängiger variabler Parameter der Zahnprofilkurve ist.

3. Punktkontaktgetriebezahnpaar basierend auf konjugierten Kurven, **dadurch gekennzeichnet, dass**:
das Zahnpaar ein konvexes Zahnrad und ein konkaves Zahnrad beinhaltet, die in Punktkontakt miteinander in Eingriff gelangen, und eine Kurvengleichung einer Kontaktkurve $\Gamma_i$, die aus Eingriffspunkten auf der Zahnfläche des konvexen Zahnrads gebildet ist,

$$\begin{cases} x_1 = x_i(u) \\ y_1 = y_i(u) \qquad u_{\min} \le u \le u_{\max} \quad (i = 1, 3, 5, ..., 2n+1) \\ z_1 = z_i(u) \end{cases}$$

ist, wobei $u$ ein unabhängiger variabler Parameter der Kurve ist; $u_{min}$ und $u_{\max}$ ein Wertebereich der Kontaktkurve ist, d.h. von einem Parameter der Kurve an dem Punkt des in Eingriff Gelangens des Zahnprofils zu einem Parameter der Kurve an dem Punkt des Lösens aus dem Eingriff des Zahnprofils; wobei das tiefgestellte $i$ verschiedene Kontaktkurven darstellt;
gemäß dem Prinzip von konjugierten Kurven eine Kurvengleichung einer Kontaktkurve $\Gamma_{i+1}$, die aus Eingriffspunkten auf der Zahnfläche des konkaven Zahnrads gebildet ist:

$$\begin{cases} x_2 = \cos\varphi_1 \cos\varphi_2 x_1 - \sin\varphi_1 \cos\varphi_2 y_1 + \sin\varphi_2 z_1 - a\cos\varphi_2 \\ y_2 = \cos\varphi_1 \sin\varphi_2 x_1 - \sin\varphi_1 \sin\varphi_2 y_1 - \cos\varphi_2 z_1 - a\sin\varphi_2 \\ z_2 = \sin\varphi_1 x_1 + \cos\varphi_1 y_1 \\ \Phi = n \bullet v^{(12)} = 0 \end{cases}$$

ist, wobei $\varphi_1$ und $\varphi_2$ Drehwinkel des konvexen Zahnrads bzw. des konkaven Zahnrads sind und $\varphi2 = i_{21}\varphi_1$, wobei $i_{21}$ ein Übersetzungsverhältnis ist; a ein Standardmittenabstand einer Getriebeübertragung ist; nein Normalvektor der konjugierten Kurven an dem Eingriffspunkt entlang der Richtung der gemeinsamen Normallinie ist; und $v^{(12)}$ ein Geschwindigkeitsvektor der relativen Bewegung des Zahnpaares an dem Eingriffspunkt ist; eine Gleichung einer äquidistanten Kurve $\Gamma_1'$, die der Kontaktkurve $\Gamma_i$ des konvexen Zahnrades entspricht,

$$\Gamma_1' \quad \begin{cases} x_{1\rho} = x_1 + \rho_i \cdot n_{xi} \\ y_{1\rho} = y_1 + \rho_i \cdot n_{yi} \\ z_{1\rho} = z_1 + \rho_i \cdot n_{zi} \end{cases}$$

ist, wobei $\rho_i$ ein Abstand zwischen der Kontaktkurve $\Gamma_i$ und der äquidistanten Kurve $\Gamma_1'$ ist; $n_{xi}$, $n_{vi}$ und $n_{zi}$ zerlegte Normalenvektoren eines Einheitsvektors einer gegebenen Normallinie an dem Eingriffspunkt entlang der Richtungen von Achsen des Koordinatensystems in Bezug auf das konvexe Zahnrad sind; eine Gleichung einer äquidistanten Kurve $\Gamma_2'$, die der Kontaktkurve $\Gamma_{i+1}$ des konkaven Zahnrades entspricht,

$$\Gamma_2' \quad \begin{cases} x_{2\rho} = x_2 + \rho_{i+1} \cdot n_{xi+1} \\ y_{2\rho} = y_2 + \rho_{i+1} \cdot n_{yi+1} \\ z_{2\rho} = z_2 + \rho_{i+1} \cdot n_{zi+1} \end{cases}$$

ist, wobei $\rho_{i+1}$ ein Abstand zwischen der Kontaktkurve $\Gamma_{i+1}$ und der äquidistanten Kurve $\Gamma_2'$ ist; $n_{xi+1}$, $n_{vi+1}$ und $n_{zi+1}$ zerlegte Normalenvektoren eines Einheitsvektors einer gegebenen Normallinie an dem Eingriffspunkt entlang der Richtungen von Achsen des Koordinatensystems in Bezug auf das konvexe Zahnrad sind; eine Zahnprofilkurve $C_1(v_1)$ des konvexen Zahnrads eine Kurve in der Normalebene der Kontaktkurve $\Gamma_i$ ist, wenn $i = 1$, es nur eine Kontaktkurve auf der Eingriffszahnfläche gibt, d.h. es gibt einen Kontaktpunkt auf der Zahnprofilkurve; wenn $i = 3$, es zwei Kontaktkurven auf der Eingriffszahnfläche gibt, d.h. es gibt zwei Kontaktpunkte auf der Zahnprofilkurve; wenn $i = 2n + 1 (n \geq 2)$, es n+1 Kontaktkurven auf der Eingriffszahnfläche gibt und es n+1 Kontaktpunkte auf der Zahnprofilkurve gibt; eine Gleichung der Zahnprofilkurve $C_1(v_1)$ des konvexen Zahnrades unter dem Koordinatensystem einer Normalebene der Kontaktkurve $\Gamma_i$

$$C_1 \quad \begin{cases} x_{n1} = x_{n1}(v_1) \\ y_{n1} = y_{n1}(v_1) \\ z_{n1} = z_{n1}(v_1) \end{cases}$$

ist, wobei $v_1$ ein unabhängiger variabler Parameter der Zahnprofilkurve $C_1(v_1)$ ist; eine Gleichung einer Zahnprofilkurve $C_2(v_2)$ des konkaven Zahnrades unter dem Koordinatensystem einer Normalebene der Kontaktkurve $\Gamma_{i+1}$

$$C_2 \quad \begin{cases} x_{n2} = x_{n2}(v_2) \\ y_{n2} = y_{n2}(v_2) \\ z_{n2} = z_{n2}(v_2) \end{cases}$$

ist, wobei $v_2$ ein unabhängiger variabler Parameter der Zahnprofilkurve $C_2(v_2)$ ist; die Eingriffszahnfläche des konvexen Zahnrads durch die Bewegung der Zahnprofilkurve $C_1(v_1)$ entlang der äquidistanten Kurve $\Gamma_1'$ erzeugt wird und ihre Gleichung

$$\Sigma_1 \qquad r = r\,(u, v_1)$$

ist, wobei $u$ ein unabhängiger variabler Parameter der Kontaktkurve ist und $v_1$ ein unabhängiger variabler Parameter der Zahnprofilkurve $C_1(v_1)$ ist;
die Eingriffszahnfläche des konkaven Zahnrads durch die Bewegung der Zahnprofilkurve $C_2(v_2)$ entlang der äquidistanten Kurve $\Gamma'_2$ erzeugt wird und ihre Gleichung

$$\Sigma_2 \qquad r = r\,(u, v_2)$$

ist, wobei $u$ ein unabhängiger variabler Parameter der Kontaktkurve ist, und $v_2$ ein unabhängiger variabler Parameter der Zahnprofilkurve $C_2(v_2)$ ist.

4. Punktkontaktgetriebezahnpaar basierend auf konjugierten Kurven nach Anspruch 3, **dadurch gekennzeichnet, dass**:
eine Gleichung der Zahnprofilkurve $C_1(v_1)$ des konvexen Zahrades unter dem Koordinatensystem einer Normalebene der Kontaktkurve $\Gamma_i$

$$C_1 \quad \begin{cases} x_{n1} = \rho_a \sin v_1 \\ y_{n1} = -\rho_a \cos v_1 \\ z_{n1} = 0 \end{cases}$$

ist, wobei $\rho_a$ ein Radius der Zahnprofilkurve ist; $v_1$ ein Winkel zwischen der Koordinatenachse $x_{n1}$ und der Normallinie eines beliebigen Punktes auf der Zahnprofilkurve ist.

5. Punktkontaktgetriebezahnpaar basierend auf konjugierten Kurven nach Anspruch 4, **dadurch gekennzeichnet, dass**:
eine Gleichung der Zahnprofilkurve $C_2(v_2)$ des konkaven Zahnrads unter dem Koordinatensystem einer Normalebene der Kontaktkurve $\Gamma_{i+1}$

$$C_2 \quad \begin{cases} x_{n2} = \rho_2 \sin v_2 + e \\ y_{n2} = -\rho_2 \cos v_2 + l_f \\ z_{n2} = 0 \end{cases}$$

ist, wobei $\rho_2$ ein Radius der Zahnprofilkurve ist; $v_2$ ein Winkel zwischen der Koordinatenachse $x_n$ und der Normallinie eines beliebigen Punktes auf der Zahnprofilkurve ist; e ein Koordinatenwert der Zahnprofilmitte auf der Koordinatenachse $x_n$ ist; $l_j$ ein Koordinatenwert der Zahnprofilmitte auf der Koordinatenachse $y_n$ ist.

6. Punktkontaktgetriebezahnpaar basierend auf konjugierten Kurven nach Anspruch 4, **dadurch gekennzeichnet, dass**:
eine Gleichung der Zahnprofilkurve $C2(v2)$ des konkaven Zahnrads unter dem Koordinatensystem einer Normalebene der Kontaktkurve $\Gamma_{i+1}$

$$C_2 \begin{cases} x_{2n} = v_2 \cos\alpha - \dfrac{v_2^{\,2}}{2p}\sin\alpha + l\sin\alpha \\[2mm] y_{2n} = v_2 \sin\alpha + \dfrac{v_2^{\,2}}{2p}\cos\alpha - l\cos\alpha \\[2mm] z_{2n} = 0 \end{cases}$$

ist, wobei $v_2$ ein unabhängiger variabler Parameter einer parabolischen Kurve ist; $\alpha$ ein Winkel zwischen der Achse $y_{2n}$ und dem Scheitel der parabolischen Kurve ist; $1$ ein Abstand zwischen dem Scheitel der parabolischen Kurve und dem Ursprung des Koordinatensystems der Normalebene ist,

und $l = \dfrac{\rho_a \sin^2\theta_i}{2\cos\theta_i} + \rho_a \cos\theta_i$ , $\theta_j$ ein Winkel zwischen einem Kontaktpunkt der parabolischen Kurve und dem Schei-

tel ist und $\rho_\alpha$ ein Radius der Zahnprofilkurve $C_1(v_1)$ der konvexen Zähne ist.

7. Punktkontaktgetriebezahnpaar basierend auf konjugierten Kurven nach Anspruch 4, **dadurch gekennzeichnet, dass**:
   eine Gleichung der Zahnprofilkurve $C_2(v_2)$ des konkaven Zahnrads unter dem Koordinatensystem einer Normalebene der Kontaktkurve $\Gamma_{i+1}$

$$\begin{cases} x_{2n} = v_2 \\[2mm] y_{2n} = a_0 + a_1 v_2 + a_2 v_2^{\,2} + \ldots + a_m v_2^{\,m} \end{cases}$$

   ist, wobei, v2 ein unabhängiger variabler Parameter der Zahnprofilkurve ist; $a_0, a_1, \ldots, a_m$ Koeffizienten der Gleichung der Zahnprofilkurve sind.

8. Punktkontaktgetriebezahnpaar basierend auf konjugierten Kurven nach Anspruch 3, **dadurch gekennzeichnet, dass**:
   die Kurvengleichung der Kontaktkurve $\Gamma_i$ des konvexen Zahnrads eine zylindrische Spirale ist und ihre Kurvengleichung

$$\begin{cases} x_1 = R_i \cos u \\[2mm] y_1 = R_i \sin u \\[2mm] z_1 = p_i u \end{cases}$$

   ist, wobei $u$ ein unabhängiger variabler Parameter der zylindrischen Spirale ist; $R_i$ ein Radius einer zylindrischen Fläche ist, auf der sich die zylindrische Spirale befindet; und $p_i$ ein Schraubenparameter der zylindrischen Spirale ist;
   gemäß dem Prinzip von konjugierten Kurven eine Kurvengleichung der Kontaktkurve $\Gamma_{i+1}$ des konkaven Zahnrads

$$\begin{cases} x_2 = R_{i+1} \cos u \\[2mm] y_2 = R_{i+1} \sin u \\[2mm] z_2 = p_{i+1} u \end{cases}$$

   ist, wobei $u$ ein unabhängiger variabler Parameter der Kurve ist; $R_{i+1}$ ein Radius eines Zylinders ist; und $\rho_{i+1}$ ein Schraubenparameter ist;
   eine Gleichung der äquidistanten Kurve $\Gamma'_1$, die der Kontaktkurve $\Gamma_i$ entspricht,

$$\Gamma'_1 \quad \begin{cases} x_1 = r_1 \cos u \\ y_1 = r_1 \sin u \\ z_1 = p_1 u \end{cases}$$

ist, wobei $u$ ein unabhängiger variabler Parameter der Kurve ist;

$$r_1 = \sqrt{R_i^2 - (\rho_i \cos \alpha_i \cos \beta)^2} - \rho_i \sin \alpha_i$$, wobei $\rho_i$ ein äquidistanter Abstand ist; $\alpha_1$ der Normaldruckwinkel des Kontaktpunktes ist; und $p_i = r_1 \cot \beta$, wobei $\beta$ ein Spiralwinkel ist;

eine Gleichung der äquidistanten Kurve $\Gamma'_2$, die der Kontaktkurve $\Gamma_{i+1}$ entspricht

$$\Gamma'_2 \quad \begin{cases} x_1 = r_2 \cos u \\ y_1 = r_2 \sin u \\ z_1 = p_2 u \end{cases}$$

ist, wobei u ein unabhängiger variabler Parameter der Kurve ist;

$$r_2 = \sqrt{R_{i+1}^2 - (\rho_{i+1} \cos \alpha_i \cos \beta)^2} - \rho_{i+1} \sin \alpha_i$$ und $r_2 = i_{21} \times r_1$; wobei $\rho_{i+1}$ ein äquidistanter Abstand zwischen der Kontaktkurve $\Gamma_{i+1}$ und der äquidistanten Kurve $\Gamma'_2$ ist; $\alpha_{i+1}$ ein Normaldruckwinkel ist; und $p_2$ ein Schraubenparameter ist und $p_2 = r_2 \cos \beta$;

eine Gleichung der Zahnprofilkurve $C_1(v_1)$ des konvexen Zahnrads unter dem Koordinatensystem einer Normalebene der Kontaktkurve $\Gamma_i$

$$C_1 \quad \begin{cases} x_{n1} = x_{n1}(v_1) \\ y_{n1} = y_{n1}(v_1) \\ z_{n1} = z_{n1}(v_1) \end{cases}$$

ist, wobei $v_1$ ein unabhängiger variabler Parameter der Zahnprofilkurve $C_1$ ist;

eine Gleichung der Zahnprofilkurve $C_2(v_2)$ des konkaven Zahnrads unter dem Koordinatensystem einer Normalebene der Kontaktkurve $\Gamma_{i+1}$

$$C_2 \quad \begin{cases} x_{n2} = x_{n2}(v_2) \\ y_{n2} = y_{n2}(v_2) \\ z_{n2} = z_{n2}(v_2) \end{cases}$$

ist, wobei $v_2$ ein unabhängiger variabler Parameter der Zahnprofilkurve C2 ist;

eine Eingriffszahnfläche des konvexen Zahnrads durch die Bewegung der Zahnprofilkurve $C_1(v_1)$ entlang der äquidistanten Kurve $\Gamma'_1$ erzeugt wird, und ihre Gleichung

$$\begin{cases} x_1 = (x_{1n} + r_1) \cos \phi_1 + y_{1n} \cos \beta \sin \phi_1 \\ y_1 = (x_{1n} + r_1) \sin \phi_1 + y_{1n} \cos \beta \cos \phi_1 \\ z_1 = r_1 \cot \beta \cdot \phi_1 - y_{1n} \sin \beta \end{cases}$$

ist, wobei $r_1$ ein Teilkreisradius des konvexen Zahnrads ist; $\phi_1$ ein Drehwinkel des konvexen Zahnrads ist; und $\beta$ der Spiralwinkel des Getriebes ist;

eine Eingriffszahnfläche des konkaven Zahnrads durch die Bewegung der Zahnprofilkurve $C_2(v_2)$ entlang der

äquidistanten Kurve $\Gamma_2{}'$ erzeugt wird, und ihre Gleichung

$$\begin{cases} x_2 = \left( x_{2n} + r_2 \right)\cos\phi_2 + y_{2n}\cos\beta\sin\phi_2 \\ y_2 = \left( x_{2n} + r_2 \right)\sin\phi_2 + y_{2n}\cos\beta\cos\phi_2 \\ z_2 = r_2\cot\beta\bullet\phi_2 - y_{2n}\sin\beta \end{cases}$$

ist, wobei $r_2$ ein Teilkreisradius des konkaven Zahnrads ist; $\Phi_2$ ein Drehwinkel des konkaven Zahnrads ist und $\Phi_2 = i_{21}\Phi_1$, wobei $i_{21}$ ein Übersetzungsverhältnis des Getriebes ist; und $\beta$ ein Spiralwinkel des Getriebes ist.

9. Bearbeitungswerkzeug zum Herstellen des Punktkontaktgetriebezahnpaars nach einem der Ansprüche 3 bis 8, **dadurch gekennzeichnet, dass**:

es eine Schneidwelle und mehrere Schneidzähne umfasst, die entlang der Umfangsrichtung der Schneidwelle befestigt sind;
wobei eine normale Zahnprofilkurve des Schneidzahnes einen Arbeitsabschnitt und einen Übergangsabschnitt beinhaltet;
der Übergangsabschnitt eine Gerade oder ein Kreisbogen ist;
eine Kurvengleichung des Arbeitsabschnitts

$$C_i \qquad \begin{cases} x_n = x_n(v_i) \\ y_n = y_n(v_i) \\ z_n = z_n(v_i) \end{cases}$$

ist, wobei $v_i$ ein unabhängiger variabler Parameter der Kurve ist, wenn $i = 1$, die Kurvengleichung des Zahnprofils des konvexen Zahnrads dargestellt wird, und wenn $i = 2$, die Kurvengleichung des Zahnprofils des konkaven Zahnrads dargestellt wird.

## Revendications

1. Engrenage du type à contact ponctuel basé sur des courbes conjuguées, **caractérisé en ce que** :
une équation d'une courbe de contact composée de points d'engrènement sur des surfaces dentées de l'engrenage est égale à :

$$\begin{cases} x_1 = x_i(u) \\ y_1 = y_i(u) \qquad u_{\min} \le u \le u_{\max} \quad (i = 1, 3, 5, ..., 2n+1) \\ z_1 = z_i(u) \end{cases}$$

dans laquelle $u$ représente un paramètre de la courbe sous la forme d'une variable indépendante ; $u_{min}$ et $u_{\max}$ représentent une plage de valeurs de la courbe de contact, c'est-à-dire à partir d'un paramètre de la courbe à un point d'entrée par engrènement du profil de denture jusqu'à un paramètre de la courbe à un point de sortie par engrènement du profil de denture ; l'indice $i$ représente différentes courbes de contact ;
une équation d'une courbe équidistante de ladite courbe de contact dans la direction de la ligne normale commune des surfaces dentées est égale à :

$$\begin{cases} x_{1\rho} = x_1 + \rho_i\bullet n_{xi} \\ y_{1\rho} = y_1 + \rho_i\bullet n_{yi} \\ z_{1\rho} = z_1 + \rho_i\bullet n_{zi} \end{cases}$$

dans laquelle $\rho_i$ représente une distance entre la courbe de contact et la courbe équidistante ; $n_{xi}$, $n_{yi}$ et $n_{zi}$ représentent des vecteurs normaux décomposés du vecteur unitaire de la ligne normale commune au point d'engrènement dans les directions des axes du système de coordonnées concernant l'engrenage ;

une équation d'une courbe du profil de denture de l'engrenage soumis au système de coordonnées du plan normal de la courbe de contact est égale à :

$$\begin{cases} x_{n1} = x_{n1}(v_1) \\ y_{n1} = y_{n1}(v_1) \\ z_{n1} = z_{n1}(v_1) \end{cases}$$

dans laquelle $v_i$ représente un paramètre de la courbe sous la forme d'une variable indépendante.

2. Engrenage du type à contact ponctuel basé sur des courbes conjuguées selon la revendication 1, **caractérisé en ce que** :
   une surface dentée d'engrènement dudit engrenage est obtenue via le mouvement de la courbe du profil de denture le long de la courbe équidistante, et son équation est égale à :

$$r = r(u, v_1)$$

dans laquelle $u$ représente un paramètre de la courbe de contact sous la forme d'une variable indépendante ; et $v_i$ représente un paramètre de la courbe du profil de denture sous la forme d'une variable indépendante.

3. Paire d'engrènement d'un engrenage du type à contact ponctuel, basée sur des courbes conjuguées, **caractérisée en ce que** :
   la paire d'engrènement englobe un engrenage convexe et un engrenage concave qui viennent s'engrener l'un l'autre via une mise en contact ponctuel, et une équation d'une courbe de contact $\Gamma_i$, composée de points d'engrènement sur la surface dentée dudit engrenage convexe est égale à :

$$\begin{cases} x_1 = x_i(u) \\ y_1 = y_i(u) \\ z_1 = z_i(u) \end{cases} \quad u_{min} \leq u \leq u_{max} \quad (i = 1, 3, 5, ..., 2n +$$

dans laquelle u représente un paramètre de la courbe sous la forme d'une variable indépendante ; $u_{min}$ et $u_{max}$ représentent une plage de valeurs de la courbe de contact, c'est-à-dire à partir d'un paramètre de la courbe à un point d'entrée par engrènement du profil de denture jusqu'à un paramètre de la courbe à un point de sortie par engrènement du profil de denture ; l'indice $i$ représente différentes courbes de contact ;

conformément au principe des courbes conjuguées, une équation d'une courbe de contact $\Gamma_{-1}$, composée de points d'engrènement sur la surface dentée dudit engrenage concave est égale à :

$$\begin{cases} x_2 = \cos\varphi_1\cos\varphi_2 x_1 - \sin\varphi_1\cos\varphi_2 y_1 + \sin\varphi_2 z_1 - a\cos\varphi_2 \\ y_2 = \cos\varphi_1\sin\varphi_2 x_1 - \sin\varphi_1\sin\varphi_2 y_1 - \cos\varphi_2 z_1 - a\sin\varphi_2 \\ z_2 = \sin\varphi_1 x_1 + \cos\varphi_1 y_1 \\ \Phi = n \bullet v^{(12)} = 0 \end{cases}$$

dans laquelle $\varphi_1$ et $\varphi_2$ représentent des angles de rotation de l'engrenage convexe et de l'engrenage concave, respectivement ; et $\varphi_2 = i_{21}\varphi_1$ où $i_{21}$ représente un rapport de transmission ; a représente une distance centrale standard d'une transmission par engrenage ; $n$ représente un vecteur normal des courbes conjuguées au point d'engrènement dans la direction de la ligne normale commune ; et $v^{(12)}$ représente un vecteur de vélocité du mouvement relatif de la paire d'engrènement au point d'engrènement ;

une équation d'une courbe équidistante $\Gamma_1'$ correspondant à la courbe de contact $\Gamma_i$ dudit engrenage convexe

est égale à :

$$\Gamma'_1 \quad \begin{cases} x_{1\rho} = x_1 + \rho_i \bullet n_{xi} \\ y_{1\rho} = y_1 + \rho_i \bullet n_{yi} \\ z_{1\rho} = z_1 + \rho_i \bullet n_{zi} \end{cases}$$

dans laquelle $\rho_i$ représente une distance entre la courbe de contact $\Gamma_i$ et la courbe équidistante $\Gamma_1'$ ; $n_{xi}$, $n_{yi}$ et $n_{zi}$ représentent des vecteurs normaux décomposés du vecteur unitaire d'une ligne normale donnée au point d'engrènement dans les directions des axes du système de coordonnées concernant l'engrenage convexe ; une équation d'une courbe équidistante $\Gamma'_2$ correspondant à la courbe de contact $\Gamma_{i+1}$ dudit engrenage concave est égale à :

$$\Gamma'_2 \quad \begin{cases} x_{2\rho} = x_2 + \rho_{i+1} \bullet n_{xi+1} \\ y_{2\rho} = y_2 + \rho_{i+1} \bullet n_{yi+1} \\ z_{2\rho} = z_2 + \rho_{i+1} \bullet n_{zi+1} \end{cases}$$

dans laquelle $\rho_{i+1}$ représente une distance entre la courbe de contact $\Gamma_{i+1}$ et la courbe équidistante $\Gamma'_2$ ; $n_{xi+1}$, $n_{yi+1}$ et $n_{zi+1}$ représentent des vecteurs normaux décomposés du vecteur unitaire d'une ligne normale donnée au point d'engrènement dans les directions des axes du système de coordonnées concernant l'engrenage concave ;
une courbe du profil de denture $C_1(v_1)$ dudit engrenage convexe représente une courbe dans le plan normal de la courbe de contact $\Gamma_i$; lorsque $i = 1$, il n'y a qu'une seule courbe de contact sur la surface dentée d'engrènement, c'est-à-dire qu'il n'y a qu'un seul point de contact sur la courbe du profil de denture ; lorsque i = 3, il y a deux courbes de contact sur la surface dentée d'engrènement, c'est-à-dire qu'il y a deux points de contact sur la courbe du profil de denture ; lorsque $i = 2n + 1 (n \geq 2)$, il y a $n + 1$ courbes de contact sur la surface dentée d'engrènement et il y a $n + 1$ points de contact sur la courbe du profil de denture ;
une équation de la courbe du profil de denture $C_1(v_1)$ dudit engrenage convexe soumis au système de coordonnées du plan normal de la courbe de contact $\Gamma_i$ est égale à :

$$C_1 \quad \begin{cases} x_{n1} = x_{n1}(v \\ y_{n1} = y_{n1}(v \\ z_{n1} = z_{n1}(v \end{cases}$$

dans laquelle $v_i$ représente un paramètre de la courbe du profil de denture $C_1(v_1)$ sous la forme d'une variable indépendante ;
une équation d'une courbe du profil de denture $C_2(v_2)$ dudit engrenage concave soumis au système de coordonnées du plan normal de la courbe de contact $\Gamma_{i+1}$ est égale à :

$$C_2 \quad \begin{cases} x_{n2} = x_{n2}(v_2) \\ y_{n2} = y_{n2}(v_2) \\ z_{n2} = z_{n2}(v_2) \end{cases}$$

dans laquelle $v_2$ représente un paramètre de la courbe du profil de denture $C_2(v_2)$ sous la forme d'une variable indépendante ;
la surface dentée d'engrènement dudit engrenage convexe est générée par le mouvement de la courbe du profil de denture $C_1(v_1)$ le long de la courbe équidistante $\Gamma'_1$ et son équation est égale à :

$$\Sigma_1 \qquad \qquad r = r$$

dans laquelle *u* représente un paramètre de la courbe de contact sous la forme d'une variable indépendante ; et $v_i$ représente un paramètre de la courbe du profil de denture $C_1(v_1)$ sous la forme d'une variable indépendante la surface dentée d'engrènement dudit engrenage concave est générée par le mouvement de la courbe du profil de denture $C_2(v_2)$ le long de la courbe équidistante $\Gamma'_2$ et son équation est égale à :

$$\Sigma_2 \qquad\qquad \boldsymbol{r} = \boldsymbol{r}(u$$

dans laquelle *u* représente un paramètre de la courbe de contact sous la forme d'une variable indépendante ; et $v_2$ représente un paramètre de la courbe du profil de denture $C_2(v_2)$ sous la forme d'une variable indépendante.

**4.** Paire d'engrènement d'un engrenage du type à contact ponctuel, basée sur des courbes conjuguées selon la revendication 3, **caractérisée en ce que** :
une équation de la courbe du profil de denture $C_1(v_1)$ dudit engrenage convexe soumis au système de coordonnées du plan normal de la courbe de contact $\Gamma_i$ est égale à :

$$C_1 \qquad \begin{cases} x_{n1} = \rho_a \sin v_1 \\ y_{n1} = -\rho_a \cos v_1 \\ z_{n1} = 0 \end{cases}$$

dans laquelle $\rho_a$ représente un rayon de la courbe du profil de denture ; $v_1$ représente un angle formé entre l'axe de coordonnées $x_{n1}$ et la ligne normale de n'importe quel point sur la courbe du profil de denture.

**5.** Paire d'engrènement d'un engrenage du type à contact ponctuel, basée sur des courbes conjuguées selon la revendication 4, **caractérisée en ce que** :
une équation de la courbe du profil de denture $C_2(v_2)$ dudit engrenage concave soumis au système de coordonnées du plan normal de la courbe de contact $\Gamma_{i+1}$ est égale à :

$$C_2 \qquad \begin{cases} x_{n2} = \rho_2 \sin v_2 + e \\ y_{n2} = -\rho_2 \cos v_2 + l_j \\ z_{n2} = 0 \end{cases}$$

dans laquelle $\rho_2$ représente un rayon de la courbe du profil de denture ; $v_2$ représente un angle formé entre l'axe de coordonnées $x_n$ et la ligne normale de n'importe quel point sur la courbe du profil de denture ; *e* représente une valeur de coordonnée du centre du profil de denture sur l'axe de coordonnées *xn*; $l_f$ représente une valeur de coordonnée du centre du profil de denture sur l'axe de coordonnées $y_n$.

**6.** Paire d'engrènement d'un engrenage du type à contact ponctuel, basée sur des courbes conjuguées selon la revendication 4, **caractérisée en ce que** :
une équation de la courbe du profil de denture $C_2(v_2)$ dudit engrenage concave soumis au système de coordonnées du plan normal de la courbe de contact $\Gamma_{i+1}$ est égale à :

$$C_2 \qquad \begin{cases} x_{2n} = v_2 \cos \alpha - \dfrac{v_2^2}{2p} \sin \alpha + l \sin \alpha \\[2mm] y_{2n} = v_2 \sin \alpha + \dfrac{v_2^2}{2p} \cos \alpha - l \cos \alpha \\[2mm] z_{2n} = 0 \end{cases}$$

dans laquelle $v_2$ représente un paramètre d'une courbe parabolique sous la forme d'une variable indépendante ; $\alpha$ représente un angle formé entre l'axe $y_{2n}$ et le sommet de la courbe parabolique ; $l$ représente une distance entre le sommet de la courbe parabolique et l'origine du système de coordonnées du plan normal, et

$$l = \frac{\rho_a \sin^2 \theta_j}{2\cos\theta_j} + \rho_a \cos\theta_j \,, \; \theta_j \text{ représentant un angle formé entre un point de contact de la courbe parabolique et le}$$

sommet, et $\rho_a$ représentant un rayon de la courbe du profil de denture $C_1(v_1)$ des dents convexes.

7. Paire d'engrènement d'un engrenage du type à contact ponctuel, basée sur des courbes conjuguées selon la revendication 4, **caractérisée en ce que** :
une équation de la courbe du profil de denture $C_2(v_2)$ dudit engrenage concave soumis au système de coordonnées du plan normal de la courbe de contact $\Gamma_{i+1}$ est égale à :

$$\begin{cases} x_{2n} = v_2 \\ y_{2n} = a_0 + a_1 v_2 + a_2 v_2^2 + \ldots + a_m v_2^m \end{cases}$$

dans laquelle $v_2$ représente un paramètre de la courbe du profil de denture sous la forme d'une variable indépendante,
représentent des coefficients de l'équation de la courbe du profil de denture.

8. Paire d'engrènement d'un engrenage du type à contact ponctuel, basée sur des courbes conjuguées selon la revendication 3, **caractérisée en ce que** :
l'équation de la courbe de contact $\Gamma_i$ dudit engrenage convexe représente une hélice cylindrique et son équation de courbe est égale à :

$$\begin{cases} x_2 = R_{i+1} \cos u \\ y_2 = R_{i+1} \sin u \\ z_2 = p_{i+1} u \end{cases}$$

dans laquelle u représente un paramètre de l'hélice cylindrique sous la forme d'une variable indépendante ; $R_i$ représente un rayon d'une surface cylindrique sur laquelle est située l'hélice cylindrique ; et $P_i$ représente un paramètre sous la forme de la vis de l'hélice cylindrique ;
conformément au principe des courbes conjuguées, une équation de la courbe de contact $\Gamma_{i+1}$ dudit engrenage concave est égale à :

$$\begin{cases} x_2 = R_{i+1} \cos u \\ y_2 = R_{i+1} \sin u \\ z_2 = p_{i+1} u \end{cases}$$

dans laquelle u représente un paramètre de la courbe sous la forme d'une variable indépendante ; $R_{i-1}$ représente un rayon d'un cylindre ; et $P_{i+1}$ représente un paramètre sous la forme d'une vis ;
une équation de la courbe équidistante $\Gamma'_1$ correspondant à la courbe de contact $\Gamma_i$ est égale à :

$$\Gamma'_1 \qquad \begin{cases} x_1 = r_1 \cos u \\ y_1 = r_1 \sin u \\ z_1 = p_i u \end{cases}$$

dans laquelle u représente un paramètre de la courbe sous la forme d'une variable indépendante ;

$$r_1 = \sqrt{R_i^2 - \left(\rho_i \cos\alpha_i \cos\beta\right)^2} - \rho_i \sin\alpha_i \,,$$ où $\rho i$ représente une distance équidistante ; $\alpha_i$ représente l'angle de pression normale du point de contact ; et $P_i = r_i \cos\beta$, où $\beta$ représente un angle d'hélice ;

une équation de la courbe équidistante $\Gamma'_2$ correspondant à la courbe de contact $\Gamma_{i-1}$ est égale à :

$$\Gamma'_2 \quad \begin{cases} x_1 = r_2 \cos u \\ y_1 = r_2 \sin u \\ z_1 = p_2 u \end{cases}$$

dans laquelle $u$ représente un paramètre de la courbe sous la forme d'une variable indépendante ;

$$r_2 = \sqrt{R_{i-1}^2 - \left(\rho_{i+1} \cos\alpha_i \cos\beta\right)^2} - \rho_{i+1} \sin\alpha_i \,,$$ et $r_2 = i_{21} \times r_1$ ; où $\rho_{i+1}$ représente une distance équidistante entre la courbe de contact $\Gamma_{i-1}$ et la courbe équidistante $\Gamma'_2$ ; $\alpha_{i+1}$ représente un angle de pression normale ; et $P_2$ représente un paramètre sous la forme d'une vis; et $p_2 = r_3 \cos\beta$ ;

une équation de la courbe du profil de denture $C_1(v_1)$ dudit engrenage convexe soumis au système de coordonnées du plan normal de la courbe de contact $\Gamma_i$ est égale à :

$$C_1 \quad \begin{cases} x_{n1} = x_{n1}(v_1) \\ y_{n1} = y_{n1}(v_1) \\ z_{n1} = z_{n1}(v_1) \end{cases}$$

dans laquelle $v_i$ représente un paramètre de la courbe du profil de denture $C_1$ sous la forme d'une variable indépendante ;

une équation de la courbe du profil de denture $C_2(v_2)$ dudit engrenage concave soumis au système de coordonnées du plan normal de la courbe de contact $\Gamma_{i+1}$ est égale à :

$$C_2 \quad \begin{cases} x_{n2} = x_{n2}(v_2) \\ y_{n2} = y_{n2}(v_2) \\ z_{n2} = z_{n2}(v_2) \end{cases}$$

dans laquelle $v_2$ représente un paramètre de la courbe du profil de denture $C_2$ sous la forme d'une variable indépendante ;

une surface dentée d'engrènement dudit engrenage convexe est générée par le mouvement de la courbe du profil de denture $C_1(v_1)$ le long de la courbe équidistante $\Gamma'_1$ et son équation est égale à :

$$\begin{cases} x_1 = (x_{1n} + r_1)\cos\phi_1 + y_{1n}\cos\beta\sin\phi_1 \\ y_1 = (x_{1n} + r_1)\sin\phi_1 + y_{1n}\cos\beta\cos\phi_1 \\ z_1 = r_1 \cot\beta \cdot \phi_1 - y_{1n}\sin\beta \end{cases}$$

dans laquelle $r_1$ représente un rayon d'enroulement de l'engrenage convexe ; $\Phi_1$ représente un angle de rotation de l'engrenage convexe ; et $\beta$ représente l'angle hélicoïdal de l'engrenage ;

une surface dentée d'engrènement dudit engrenage concave est générée par le mouvement de la courbe du profil de denture $C_2(v_2)$ le long de la courbe équidistante $\Gamma_2'$ et son équation est égale à :

$$\begin{cases} x_2 = \left( x_{2n} + r_2 \right) \cos \phi_2 + y_{2n} \cos \beta \sin \phi_2 \\ y_2 = \left( x_{2n} + r_2 \right) \sin \phi_2 + y_{2n} \cos \beta \cos \phi_2 \\ z_2 = r_2 \cot \beta \bullet \phi_2 - y_{2n} \sin \beta \end{cases}$$

dans laquelle $r_2$ représente un rayon d'enroulement de l'engrenage concave ; $\Phi_2$ représente un angle de rotation de l'engrenage concave ; et , où $I_{21}$ représente un rapport de transmission de l'engrenage ; et $\beta$ représente un angle hélicoïdal de l'engrenage.

9. Outil d'usinage pour la fabrication des paires d'engrènement d'un engrenage du type à contact ponctuel selon l'une quelconque des revendications 3 à 8, **caractérisé en ce que** :

Il englobe un arbre de fraisage ainsi que plusieurs dents de coupe fixées dans la direction circonférentielle dudit arbre de fraisage ;
dans lequel une courbe normale du profil de denture desdites dents de coupe englobe un tronçon de travail et un tronçon de transition ;
ledit tronçon de transition représente une ligne droite ou un arc circulaire ;
une équation de courbe dudit tronçon de travail est égale à :

$$C_i \qquad \begin{cases} x_n = x_n(v_i) \\ y_n = y_n(v_i) \\ z_n = z_n(v_i) \end{cases}$$

dans laquelle $u$ représente un paramètre de la courbe sous la forme d'une variable indépendante ; lorsque $i = 1$, l'équation de courbe du profil de denture de l'engrenage convexe est représentée et lorsque $i = 2$, l'équation de courbe du profil de denture de l'engrenage concave est représentée.

FIG. 1

FIG. 2

FIG. 3

FIG. 4

FIG. 5

FIG. 6

FIG. 7

FIG. 8

FIG. 9

FIG. 10

FIG. 11

FIG. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 102853054 A
- CN 103075493 A